# EUROPEAN PATENT APPLICATION

(11) **EP 3 514 281 A1**
(43) Date of publication of application: **24.07.2019**
(21) Application number: 17850953.5
(22) Date of filing: 13.09.2017
(51) Int. Cl.: D06N 3/00, D06P 3/52

(54) **DYED ARTIFICIAL LEATHER BASE MATERIAL, NAPPED ARTIFICIAL LEATHER, ARTIFICIAL LEATHER WITH RESIN LAYER, SHOES, DECORATIVE SHEET, AND DECORATIVE MOLDED BODY**

(30) Priority: 14.09.2016 JP 2016179454; 14.09.2016 JP 2016179455
(71) Applicant: Kuraray Co., Ltd., Kurashiki-shi, Okayama 710-0801 (JP)
(72) Inventor: FUJISAWA, Michinori, Okayama (JP); MATSUDA, Daisuke, Okayama (JP); ITO, Toshiyuki, Tokyo (JP); MURATE, Yasunori, Okayama (JP); ANDO, Tetsuya, Osaka-shi, Osaka (JP); WARITA, Masato, Okayama (JP); NARUMOTO, Naoto, Okayama (JP)
(74) Representative: Vossius & Partner Patentanwälte Rechtsanwälte mbB
(86) International application number: PCT/JP2017/033159
(87) International publication number: WO 2018/052052

(57) **Abstract**

Disclosed is an artificial leather base material having a surface with a lightness L* value of ≤ 50 and including a fiber base material that includes cationic dye-dyeable polyester fibers and an elastic polymer, the artificial leather base material being dyed with at least one cationic dye. Also provided is a resin layer-equipped artificial leather, a napped artificial leather, and a shoe that use the artificial leather base material is used. Also provided is a decorating sheet including the artificial leather base material, and a decorative molded body using the same.

## Description

### [Technical Field]

The present invention relates to a dyed artificial leather base material, a napped artificial leather, a resin layer-equipped artificial leather, a shoe, a decorating sheet, and a decorative molded body.

### [Background Art]

Artificial leather base materials are used for the surface members of various articles for daily use. Specifically, an artificial leather base material can be used, for example, as the upper material of shoes by being integrated with an outsole made of a rubber, a synthetic resin or the like, or as the surface member of a car seat, a general merchandise or the like by being attached to a member made of a different material with an adhesive. When used as the surface member, the artificial leather base material is formed into a napped artificial leather by forming fiber naps on the surface thereof, or formed into a resin layer-equipped artificial leather by integrating therewith a resin of a film, a urethane foam, a hard plastic plate or the like, thus imparting a unique appearance design, tactile impression or texture to the artificial leather base material.

Decorative molded bodies for which an artificial leather is used as a surface decorating sheet are also known as the exterior member, including, for example, the casing of a mobile device such as a mobile phone, a home electrical appliance, and a sanitary product, the interior member of a vehicle, a vessel, an aircraft and the like, and the exterior member of a building material, an article of furniture arid the like. For example, PTL 1 below discloses a decorating sheet, which is an artificial leather integrated with a resin molded body by in-molding, and a decorative molded body using the same.

In general, an artificial leather base material is produced by coloring a fiber base material including a non-woven fabric and an elastic polymer such as polyurethane. As the fibers included in the artificial leather base material, polyester fibers can be preferably used because of the excellent heat resistance and moldability. As the dye for dyeing the artificial leather base material including polyester fibers, a disperse dye is widely used because of the excellent color development. However, an artificial leather base material dyed with a disperse dye is problematic in that the disperse dye may contaminate another member and a molded body to be decorated, and such contamination can be prominent when the ambient temperature or the pressure applied to the member is high, or when the adhesive or the like contains an organic solvent.

For example, PTL 2 below discloses an ultrafine fiber napped non-woven fabric including polyester ultrafine fibers that can be dyed with a cationic dye and an elastomeric matrix, and a UV stabilizer composition. Also, PTL 3 below discloses a technique relating to a synthetic leather, namely, a synthetic leather obtained by forming a resin layer on the surface of a double-raschel knitted fabric. The double-raschel knitted fabric includes a front knitted fabric, a back knitted fabric, and a pile layer connecting the front knitted fabric and the back knitted fabric. The fibers constituting the front knitted fabric are polyester fibers dyed with a cationic dye, and a resin layer is formed on the front knitted fabric side. Then, the polyester fibers include a dicarboxylic acid component composed mainly of terephthalic acid, and a polyester including a glycol component composed mainly of ethylene glycol, wherein the dicarboxylic acid component includes a component represented by the following formula (III): 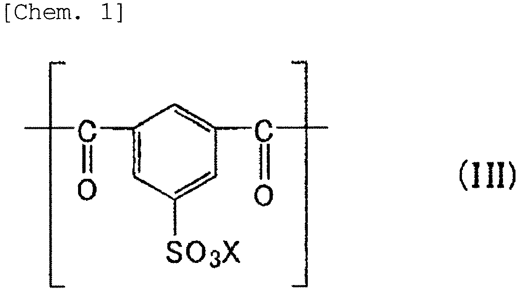 [In the formula (III), X represents a metal ion, a quaternary phosphonium ion, or a quaternary ammonium ion.]

For example, PTL 4 below discloses a deodorizing fabric that has been subjected to a deodorizing treatment, wherein the deodorizing fabric includes, as a copolymer component, copolymerized polyester fibers a containing, in an acid component, a metal salt (A) of a sulfoisophthalic acid or a quaternary phosphonium salt or a quaternary ammonium salt (B) of a sulfoisophthalic acid such that 3.0 ≤ A + B ≤ 5.0 (mol% ) and 0.2 ≤ B/(A+B) ≤ 0.7, and the deodorizing fabric has been dyed with a cationic dye.

### [Citation List]

### [Patent Literatures]

[PTL 1] WO 2015/029453 pamphlet
[PTL 2] Japanese Laid-Open Patent Publication No. 2007-16378
[PTL 3] Japanese Laid-Open Patent Publication No. 2014-29050
[PTL 4] Japanese Laid-Open Patent Publication No. 2010-242240

### [Summary of Invention]

### [Technical Problem]

For a grain-finished artificial leather obtained by stacking a dark color resin layer on an artificial leather base material including polyester fibers, the color of the artificial leather base material covered by the resin layer is not visible from the surface side. Accordingly, there is no need to color the artificial leather base material. When a suede-like or nubuck-like napped artificial leather dyed with a disperse dye is integrated with an outsole made of a rubber or a'synthetic resin as a shoe upper material, constraints are imposed on the shoe design so that the contamination of the outsole caused ty the disperse dye migrating from the napped artificial leather is less conspicuous, for example, by reducing the amount of the dye for dyeing the napped artificial leather to achieve a light color, using a napped artificial leather for which a pigment is used for coloring, or coloring the outsole in a dark color.

However, in order to satisfy the customers' requirement for the design diversification, there is a need for a resin layer-equipped artificial leather obtained by combining a dark-color artificial leather with a white or light-color resin layer. There is also a need for a dark colored napped artificial leather as a shoe upper material with which a white or light-color outsole is to be combined. In such applications, the disperse dye may migrate from the artificial leather base material to the white or light-color resin layer or the outsole, thus contaminating these portions.

In the case of producing a decorative molded body by integrating, with a molded body to be decorated, a decorating sheet including an artificial leather base material dyed with a disperse dye, the following problem arises. The decorative molded body is produced, for example, by primary decorative molding such as in-molding in which, in a state in which a decorating sheet or a preform molded body obtained by shaping the decorating sheet into a three-dimensional shape is disposed in advance in a cavity of a mold, molten resin is injected into the cavity, and then solidified, thus molding a decorative molded body in which the decorating sheet is integrated with the surface of a resin molded body. As another method, the decorative molded body can be produced by secondary decorative molding such as overlaying in which a decorating sheet is integrated with a resin molded body by being attached to the resin molded body with an adhesive while shaped by heating so as to follow the surface thereof. In the case of a decorating sheet dyed with a disperse dye, the dye may be sublimated by heat or pressure or may be liberated by an organic solvent contained in the adhesive, when the decorating sheet is integrated with the molded body to be decorated. As a result, the disperse dye that has migrated from the decorating sheet contaminates the molded body to be decorated, which is a resin molded body. When the molded body to be decorated is white or light color, the contamination caused by the disperse dye becomes even more conspicuous, thus significantly compromising the commercial value.

As described above, for a decorative molded body in which a resin layer-equipped artificial leather whose resin layer has a dark color is integrated with a resin molded body, the artificial leather base material is covered by the dark color resin layer, so that the color of the artificial leather base material is not visible from the surface side. However, depending on the shape of the decorative molded body, for example, in the case of a decorative molded body having an opening, the cross section of the decorating sheet is exposed. Furthermore, when an aftertreatment such as a skiving treatment is not performed on an end face of the decorating sheet at an end face of a decorative molded body, the cross section of the decorating sheet is also exposed. For a decorative molded body having such a shape in which the cross section of the decorating sheet is exposed, in order to prevent degradation of the design quality at the end face and the cross section of the opening, there is a need for a resin layer-equipped artificial leather obtained by coloring an artificial leather base material, and, therefore, there is the problem of contamination of the resin layer and the resin molded body caused by the disperse dye used for dying the artificial leather base material.

It is an object of the present invention to provide a dark colored artificial leather base material, wherein the artificial leather base material is less likely to contaminate a resin layer or a resin molded body with a dye even when it comes into contact with another member such as as e resin layer stacked on the artificial leather base material, or a resin molded body such as an outsole, and a product using the same that has excellent design quality. It is another object of the present invention to provide a decorating sheet for use in production of a decorative molded body, wherein the decorating sheet uses a dark colored artificial leather base material that is less likely to cause contamination of a molded body to be decorated, with which it comes into contact, with a dye, and a decorative molded body using the decorating sheet.

### [Solution to Problem]

An aspect of the present invention is directed to an artificial leather base material including a fiber base material that includes cationic dye-dyeable polyester fibers and an elastic polymer, the artificial leather base material being dyed with at least one cationic dye and having a surface with a lightness L* value of ≤ 50. Such an artificial leather base material is less likely to cause migration of the dye to another member in contact therewith even though it is colored in a dark color. In particular, even when such an artificial leather base material is integrated with a white or light-color resin layer or resin molded body, the artificial leather base material is less likely to contaminate the resin layer or the resin molded body. The fiber base material includes, for example, a non-woven fabric of cationic dye-dyeable polyester fibers and an elastic polymer.

For example, it is preferable that the artificial leather base material has a grade of color difference, determined in an evaluation of color migration to a white polyvinyl chloride film with a thickness of 0.8 mm under a load of 750 g/cm² at 50°C for 16 hours, of 4 or more, because even a dark colored artificial leather base material is less likely to contaminate a white or light-color resin layer, a resin molded body, or another member in contact therewith. Note that that "a grade of color difference, determined in an evaluation of color migration to a white polyvinyl chloride film, of 4 or more" means that color difference ΔE* ≤ 2.0 is achieved in the evaluation of color migration.

In the artificial leather base material, it is preferable that, after a white polyurethane film with a thickness of 250 µm is pressure-bonded under heating to a surface of the artificial leather base material via a polyurethane adhesive under 5 Kg/cm² at 130°C for 1 minute to form a resin layer-equipped artificial leather, and the resin layer-equipped artificial leather is pressurized under heating under 20 Kg/cm² at 150°C for 1 minute, the artificial leather has a grade of color difference, determined in an evaluation of color migration to the white polyurethane film, of 3 or more. This is because even when a resin layer-equipped artificial leather including a white or light-color resin layer is formed, the artificial leather base material is less likely to contaminate the resin layer. Note that "a grade of color difference, determined in an evaluation of color migration to the white polyurethane film, of 3 or more" means that a color difference ΔE* of ≤ 3.8 is achieved in the evaluation of color migration.

It is preferable that the artificial leather base material has a grade of color difference, determined in an evaluation of color migration using methyl ethyl ketone (MEK), of 2 or more, because the artificial leather base material is less likely to be contaminate the resin layer when the artificial leather base material is bonded to a white or light-color resin layer with an adhesive containing a solvent. Note that "a grade of color difference, determined in an evaluation of color migration using methyl ethyl ketone (MEK), of 2 or more" means that a grade of color difference, determined in an evaluation of color migration to a white polyurethane film in accordance with the JIS gray-scale standard, of 2 or more.

In the artificial leather base material, it is preferable that a product of a softness and a thickness of the artificial leather base material is 2 or more, because a flexible texture can be achieved.

It is preferable that the artificial leather base material contains 0.5 to 20 parts by mass of the cationic dye, per 100 parts by mass of the fiber base material, because even a dark colored artificial leather base material is less likely to cause migration of the dye.

It is preferable that the artificial leather base material has a grade, determined in a water fastness test for a cotton cloth in accordance with JIS L 0846, of 4-5 or more, because the migration of the dye is sufficiently suppressed since the cationic dye that is not ionically bonded, which is likely to be detached by coming into contact with water, has been removed.

Another aspect of the present invention is directed to a resin layer-equipped artificial leather including: any one of the above-described artificial leather base materials; and a resin layer stacked on at least one surface of the artificial leather base material. Preferably, the resin layer has a surface with a lightness L* value of > 50.

In the resin layer-equipped artificial leather, it is preferable that a lightness difference ΔL* between the artificial leather base material and the resin layer is 10 or more, because a high-contrast end face or appearance with a color difference and excellent design quality can be obtained, and the effects of the present invention become prominent.

Another aspect of the present invention is directed to a napped artificial leather obtained by napping at least one surface of any one of the above-described artificial leather base materials, the artificial leather base material having a surface with a lightness L* value of ≤ 50.

Another aspect of the present invention is directed to a shoe including: the above-described napped artificial leather as an upper material; and an outsole bonded to the upper material, the outsole having a lightness L* value of > 50.

Another aspect of the present invention is directed to a decorating sheet for being integrated with a molded body to be decorated, including any one of the above-described artificial leather base materials. With such a decorating sheet, the contamination of the molded body to be decorated with a dye can be suppressed during the manufacturing process via a heating step of a decorative molded body or in use thereof.

Preferably, the decorating sheet is a preform molded body shaped into a three-dimensional shape. With such a preform molded body, the migration of the dye to another member can also be suppressed in preform molding.

Another aspect of the present invention is directed to a decorative molded body including: a molded body to be decorated; and the decorating sheet as described above that is stacked and integrated on the molded body to be decorated. Such a decorative molded body is less likely to be contaminated by the dye migrating from the artificial leather base material even when the molded body to be decorated is white or light colored, or transparent, such as a molded body to be decorated having a lightness L* value of > 50. In particular, this is also preferable when the molded body to be decorated has a lightness L* value of > 50, such as a white, light-color, or transparent one, or when the lightness difference ΔL* between the molded body to be decorated and the decorating sheet is 10 or more, because the contamination by the dye is less conspicuous.

### [Advantageous Effects of Invention]

According to the present invention, it is possible to obtain an artificial leather base material dyed in a dark color that is less likely to cause contamination of a resin layer or a resin molded body with a dye even when it is integrated with a white or light-color surface resin layer or a resin molded body such as an outsole, and an artificial leather product including the artificial leather base material.. Furthermore, according to the present invention, it is possible to obtain a decorating sheet including an artificial leather base material dyed in a dark color that is less likely to cause contamination of a molded body to be decorated with a dye, and a decorative molded body, such as a casing, using the same.

### [Brief Description of Drawings]

FIG. 1 is a schematic cross-sectional view of a resin layer-equipped artificial leather 10 including an artificial leather base material 1 according to an embodiment.
FIG. 2A is a schematic diagram of a shoe 20 that uses the artificial leather base material 1 according to the embodiment as an upper material.
FIG. 2B is a schematic cross-sectional view of the shoe 20.
FIG. 3A is an explanatory diagram for illustrating a step for molding a preform molded body 15 by vacuum molding using a decorating sheet 11 including the artificial leather base material.
FIG. 3B is an explanatory diagram for illustrating a step for molding a preform molded body 15 by vacuum molding using the decorating sheet 11 including the artificial leather base material.
FIG. 3C is an explanatory diagram for illustrating'a step for molding a preform molded body 15 by vacuum molding using the decorating sheet 11 including the artificial leather base material.
FIG. 3D is an explanatory diagram for illustrating a step for molding a preform molded body 15 by vacuum molding using the decorating sheet 11 including the artificial leather base material.
FIG. 3E is an explanatory diagram for illustrating a step for molding a preform molded body 15 by vacuum molding using the decorating sheet 11 including the artificial leather base material.
FIG. 3F is an explanatory diagram for illustrating a step for molding a preform molded body 15 by vacuum molding using the decorating sheet 11 including the artificial leather base material.
FIG. 4A is an explanatory diagram for illustrating a step for molding a decorative molded body 30 by in-molding using the preform molded body 15.
FIG. 4B is an explanatory diagram for illustrating a step for molding a decorative molded body 30 by in-molding using the preform molded body 15.
FIG. 4C is an explanatory diagram for illustrating a step for molding the decorative molded body 30 by in-molding using the preform molded body 15.
FIG. 4D is an explanatory diagram for illustrating a step for molding the decorative molded body 30 by in-molding using the preform molded body 15.
FIG. 5 is a schematic cross-sectional view of a decorative molded body 50 produced by bonding a resin layer-equipped artificial leather 40 to a molded body 43 to be decorated.
FIG. 6 is a schematic perspective view showing the shape and the dimensions of a preform molded body according to examples.

### [Description of Embodiments]

First, an embodiment of an artificial leather base material according to the present invention will be described in detail, in conjunction with an exemplary production method thereof. Note that the artificial leather base material may be used as a resin layer-equipped artificial leather by forming a resin layer on the surface thereof, may be used as a napped artificial leather formed by napping the surface thereof into a suede-like or nubuck-like surface, or may be directly used as an artificial leather.

In the production method of an artificial leather base material according to the present embodiment, first, a fiber base material that includes a fiber fabric including cationic dye-dyeable polyester fibers and an elastic polymer applied to the fiber fabric is prepared.' The "cationic dye-dyeable polyester fibers" refer to polyester fibers, as will be described below, that include dye sites for a cationic dye in the molecule.

The fineness of the dyeable polyester fibers is not particularly limited. For example, it is possible to use regular fibers having a fineness of 1 dtex or more, or ultrafine fibers having a fineness of less than 1 dtex. From the viewpoint of particularly suppressing the migration of the cationic dye to another member, the fineness is preferably 0.05 to 5 dtex, more preferably 0.09 to 4 dtex, particularly preferably 0.1 to 3 dtex, quite particularly preferably 0.14 to 2.5 dtex. With such a fineness, good color development can also be achieved with a small amount of the cationic dye, so that the migration of the cationic dye can be suppressed, and the flexible texture can be maintained. When the fineness is too low, the surface area of the fibers becomes too large, so that it becomes difficult to develop a dark color unless the cationic dye is used at a high concentration. As a result, the cationic dye tends to migrate to another member. When the fineness is too high, the surface area of the fibers becomes small. Accordingly, dyeing can be achieved with a smaller dye content in the case of developing the same color, so that the dye is less likely to migrate. On the other hand, in the case of achieving a napped finish, the writing effect and the napped feel are reduced, the texture tends to be hard, and the appearance and the surface touch are degraded. For use as a decorating sheet, a fineness that is too high tends to result in reduced stretchability during softening by heating, thus making it difficult to shape an accurate shape during molding.

As the fiber fabric, it is possible to use a non-woven fabric, a woven fabric, a knitted fabric, and the like without any particular limitation. Among these, a non-woven fabric, in particular, an entangled non-woven fabric obtained by entangling ultrafine fibers are preferable. The non-woven fabric obtained by entangling ultrafine fibers can be easily stretched during molding. In the case of producing a decorative molded body by in-molding, which will be described below, the non-woven fabric makes it difficult for molten resin to permeate the artificial leather base material, thus retaining a high fiber-like texture. In the present embodiment, a method for producing, as an example of the fiber fabric, an entangled non-woven fabric (hereinafter also simply referred to as a "non-woven fabric") obtained by entangling ultrafine fibers of cationic dye-dyeable polyester fibers through an entangling treatment of ultrafine fiber-generating fibers will be described in detail as a representative example. Note that the type of the non-woven fabric obtained by entangling ultrafine fibers is not particularly limited, and a non-woven fabric that uses direct spun ultrafine fibers may be used.

In the production of an entangled non-woven fabric made of ultrafine fibers of a cationic dye-dyeable polyester, first, an entangled non-woven fabric of ultrafine fiber-generating fibers is produced. Examples of the production method of the entangled non-woven fabric of ultrafine fiber-generating fibers include a method involving melt-spinning ultrafine fiber-generating fibers and directly collecting the resultant fibers as long fibers without intentionally cutting them, thus forming a fiber web, and a method involving forming a fiber web by carding or the like using staples obtained by cutting ultrafine fiber-generating fibers into a predetermined length, and thereafter subjecting them to a known entangling treatment. Note that "long fibers" refer to fibers that are continuous in the length direction other than staples, and are also referred to as "filaments". From the viewpoint of sufficiently increasing the fiber density, the length of the long fibers is, for example, preferably 100 mm or more, more preferably 200 mm or more. The upper limit of the length of the long fibers is not particularly limited, and may be several meters, several hundred meters, several kilometers or longer, and be continuously spun. In the present embodiment, the production of a long fiber-web will be described in detail as a representative example.

"Ultrafine fiber-generating fibers" refer to fibers that generate ultrafine fibers having a small fineness as a result of performing a chemical or physical post-treatment on the spun fibers. In the present embodiment, a production method using island-in-the-sea composite fibers as the ultrafine fiber-generating fibers will be described; however, known ultrafine fiber-generating fibers such as strip/division-type composite fibers may be used in place of the island-in-the-sea composite fibers.

An island-in-the-sea composite fiber is a multicomponent composite fiber composed of at least two polymers, and has a cross section on which an island component polymer is dispersed in a matrix composed of a sea component polymer. A long-fiber web of the island-in-the-sea composite fibers is formed by melt-spinning the island-in-the-sea composite fibers and directly collecting the resultant fibers as long fibers on a net without cutting them.

In the present embodiment, it is preferable to use, as the island component polymer, a cationic dye-dyeable polyester obtained by copolymerization of a copolymerizable monomer including a dicarboxylic acid component composed mainly of terephthalic acid and including 1.5 to 3 mol% of a component represented by the following formula (I), and a glycol component composed mainly of ethylene glycol. 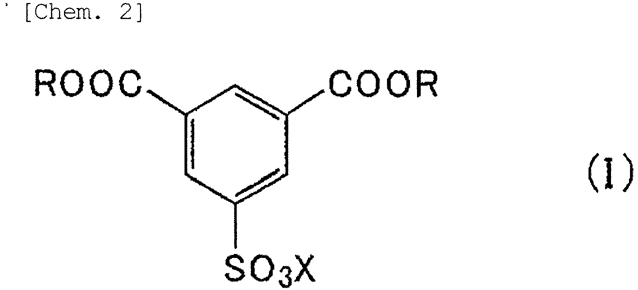 [In the above formula (I), R represents hydrogen, or an alkyl group or a 2-hydroxyethyl group having 1 to 10 carbon atoms, and X represents a metal ion, a quaternary phosphonium ion, or a quaternary ammonium ion.]

Examples of the compound represented by the formula (I) include: alkali metal salts (lithium salt, sodium salt, potassium salt, rubidium salt, and cesium salt) of 5-sulfoisophthalic acid; 5-tetraalkyl phosphonium sulfoisophthalic acid such as 5-tetrabutyl phosphonium sulfoisophthalic acid, and 5-ethyl tributyl phosphonium sulfoisophthalic acid; and 5-tetraalkyl ammonium sulfoisophthalic acid such as 5-tetrabutyl ammonium sulfoisophthalic acid and 5-ethyl tributyl ammonium sulfoisophthalic acid. The compounds represented by the formula (I) may be used alone or in a combination of two or more. Among these, it is preferable to include a compound represented by the formula (I) where X is a quaternary phosphonium ion or a quaternary ammonium ion, because a cationic dye-dyeable polyester having excellent mechanical properties and high-speed spinnability can be obtained. It is preferable to use a cationic dye-dyeable polyester obtained by polymerization of a copolymerizable monomer that includes a dicarboxylic acid component including 1.5 to 3 mol% of the compound represented by the formula (I), in particular, the compound represented by the formula (I) where X is a quaternary phosphonium ion or a quaternary ammonium ion and composed mainly of terephthalic acid, and a glycol component composed mainly of ethylene glycol, because color migration can be easily suppressed even when the artificial leather base material is dyed in a dark a color.

The ratio of the unit in the cationic dye-dyeable polyester derived from the formula (I) that is represented by the following formula (II): 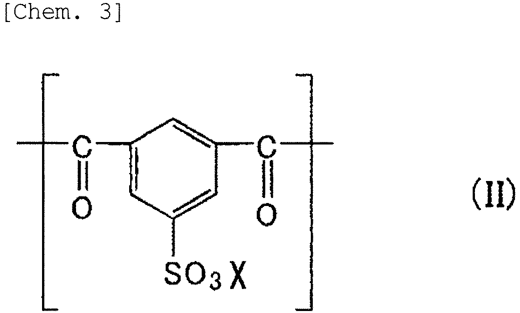 [In the above formula (II), X represents a metal ion, a quaternary phosphonium ion, or a quaternary ammonium ion.] is preferably 1.5 to 3 mol%, more preferably 1.6 to 2.5 mol%.

When the ratio of the unit represented by the formula (II) is less than 1.5 mol%, the dyeing fastness when the artificial leather base material is dyed with a cationic dye tends to be reduced. On the other hand, when the ratio of the unit represented by the formula (II) exceeds 3 mol%, the high-speed spinnability is reduced, thus making it difficult to obtain ultrafine fibers. Also, the mechanical properties, such as tear strength, of the resulting artificial leather base material tend to be significantly reduced.

Here, "mainly composed of terephthalic acid" means terephthalic acid constitutes 50 mol% or more of the dicarboxylic acid component in the copolymerizable monomer. The terephthalic acid content of the dicarboxylic acid component is preferably 75 mol% or more. For the purpose of improving the dyeing fastness of a cationic dye, increasing the high-speed spinnability, and improving the shaping properties when using the artificial leather base material for molding applications, another dicarboxylic acid, excluding the compound represented by the formula (I), may be included as the dicarboxylic acid component in order to lower the glass transition temperature. Specific examples of another dicarboxylic acid component may include other dicarboxylic acids, including, for example, aromatic dicarboxylic acid such as isophthalic acid, cyclohexane dicarboxylic acid such as 1,4-cyclohexane dicarboxylic acid, and aliphatic dicarboxylic acid such as adipic acid, and derivatives thereof. Among these, it is particularly preferable to use isophthalic acid, or a combination of 1,4-cyclohexane dicarboxylic acid and adipic acid, or derivatives thereof, because of the excellent mechanical properties and high-speed spinnability.

As the dicarboxylic acid component, the copolymerization ratio of another dicarboxylic acid is preferably 2 to 12 mol%, more preferably 3 to 10 mol%. When the copolymerization ratio of another dicarboxylic acid is less than 2 mol%, the glass transition temperature is not sufficiently lowered, and the degree of orientation of amorphous sites inside the fibers increases, so that dyeability tends to be reduced. On the other hand, when the copolymerization ratio of another dicarboxylic acid exceeds 12 mol%, the glass transition temperature is excessively lowered, and the degree of orientation of the amorphous sites inside the fibers is reduced, so that the fiber strength tends to be reduced. Note that when an isophthalic acid unit is contained as another dicarboxylic acid unit, it is preferable to contain, as the dicarboxylic acid unit, preferably 1 to 6 mol%, more preferably 2 to 5 mol% of the isophthalic acid unit, because of the excellent mechanical properties and high-speed spinnability. When a 1,4-cyclohexane dicarboxylic acid unit and an adipic acid unit are contained, it is preferable to include, preferably 1 to 6 mol%, more preferably 2 to 5 mol% of each of the 1,4-cyclohexane dicarboxylic acid unit and the adipic acid unit, because a cationic dye-dyeable polyester having excellent mechanical properties and high-speed spinnability can be obtained.

"Composed mainly of ethylene glycol" means that ethylene glycol constitutes 50 mol% or more of the glycol component of the copolymerizable monomer. The ethylene glycol content of the glycol component is preferably 75 mol% or more, more preferably 90 mol% or more. Examples of other components include diethylene glycol and polyethylene glycol.

The glass transition temperature (Tg) of the cationic dye-dyeable polyester is not particularly limited, and is preferably 60 to 70°C, more preferably 60 to 65°C. When Tg is too high, the high-speed stretchability is reduced, and the shaping properties tend to be reduced when heat-molding the artificial leather base material for use.

If necessary, a colorant such as carbon black, a weathering agent, an antifungal agent, and the like may be added to the cationic dye-dyeable polyester, so long as the effects of the present invention are not impaired.

As the sea component polymer, a polymer having higher solubility in a solvent or higher decomposability by a decomposition agent than those of the cationic dye-dyeable polyester is selected. Specific examples of the sea component polymer include a water-soluble polyvinyl alcohol resin (water-soluble PVA), polyethylene, polypropylene, polystyrene, an ethylene-propylene copolymer, an ethylene-vinyl acetate copolymer, a styrene-ethylene copolymer, and a styrene-acrylic copolymer.

The island-in-the-sea composite fibers can be produced by melt spinning in which the sea component polymer and the cationic dye-dyeable polyester serving as the island component polymer are melt-extruded from a multicomponent fiber spinning spinneret. The fineness of the island-in-the-sea composite fibers is not particularly limited, and is preferably 0.5 to 10 dtex, more preferably 0.7 to 5 dtex.

The molten island-in-the-sea composite fibers discharged from the spinneret are cooled by a cooling apparatus, and are further drawn out and attenuated by a suction apparatus such as an air jet nozzle so as to have a desired fineness. Then, the drawn and attenuated long fibers are piled on a collection surface of a movable net or the like, thereby obtaining a long-fiber web. Note that, in order to stabilize the shape, a part of the long-fiber web may be further pressure-bonded by pressing the long-fiber web if necessary.

The obtained long-fiber web is subjected to an entangling treatment, thereby producing an entangled non-woven fabric of long fibers. Specific examples of the entangling treatment for the long-fiber web include a treatment in which a plurality of layers of long-fiber webs are superposed in the thickness direction by using a cross lapper or the like, and subsequently needle-punched simultaneously or alternately from both sides such that at least one barb penetrates the web.

In addition, an oil solution, an antistatic agent, or the like may be added to the long fiber-web in any stage from the spinning step to the entangling treatment of the island-in-the-sea composite fiber. Furthermore, if necessary, the fiber density of the long fiber-web may be further increased in advance by performing a shrinking treatment in which the long-fiber web is immersed in hot water at about 70 to 150°C, thus imparting uniformity. The fiber density may be further increased by performing hot pressing after the entangling treatment so as to impart shape stability. The basis weight of the entangled non-woven fabric is preferably in the range of about 100 to 2000 g/m².

If necessary, a treatment to further increase the fiber density and the degree of entanglement may be performed by heat-shrinking the entangled non-woven fabric of the island-in-the-sea composite fibers. A further densification of and the fixation of the shape of the entangled non-woven fabric, and the smoothing of the surface thereof may be performed by further hot-pressing the heat shrunk entangled non-woven fabric.

By removing the sea component polymer from the island-in-the-sea composite fibers in the entangled non-woven fabric, an entangled non-woven fabric composed of ultrafine fibers of the cationic dye-dyeable polyester is obtained. As the method for removing the sea component polymer, a conventionally known ultrafine fiber formation method such as a method involving immersing the entangled non-woven fabric in a solvent or decomposition agent capable of selectively removing only the sea component polymer can be used without any particular limitation. For example, in the case of using the water-soluble PVA as the sea component polymer, it is preferable to use hot water as the solvent.

In the case of using the water-soluble PVA as the sea component polymer, it is preferable to remove the water-soluble PVA by extraction until the removal rate of the water-soluble PVA becomes about 95 to 100% by immersing the web in hot water at 85 to 100°C for 100 to 600 seconds. Note that the water-soluble PVA can be more efficiently removed by extraction by repeating a dip-nipping treatment in the immersing.

The basis weight of the entangled non-woven fabric composed of ultrafine fibers of the cationic dye-dyeable polyester thus obtained is preferably 140 to 3000 g/m², more preferably 200 to 2000 g/m².

In the production of the artificial leather base material, an elastic polymer such as polyurethane is impregnated into the internal voids of the entangled non-woven fabric before or after, or both before and after generating ultrafine fibers from ultrafine fiber-generating fibers such as island-in-the-sea composite fibers in order to impart shape stability and fullness to the entangled non-woven fabric of the cationic dye-dyeable polyester.

Specific examples of the elastic polymer include polyurethanes, acrylonitrile elastomers, olefin elastomers, polyester elastomers, polyamide elastomers, and acrylic elastomers. Among these, polyurethanes are preferable.

Note that the elastic polymer may further contain a colorant such as a pigment (e.g., carbon black) or a dye, a coagulation regulator, an antioxidant, an ultraviolet absorber, a fluorescent agent, an antifungal agent, a penetrant, an antifoaming agent, a lubricant, a water-repellent agent, an oil-repellent agent, a thickener, a filler, a curing accelerator, a foaming agent, a water-soluble polymer compound such as polyvinyl alcohol or carboxymethyl cellulose, inorganic fine particles, and a conductive agent, so long as the effects of the present invention are not impaired.

The content ratio of the elastic polymer is preferably 0.1 to 50 mass%, more preferably 3 to 40 mass%, particularly preferably 5 to 25 mass%, quite particularly preferably 10 to 15 mass%, relative to the total amount of the elastic polymer and the cationic dye-dyeable polyester fibers, because color migration to the resin layer in contact with the artificial leather base material dyed with a cationic dye, the molded body to be decorated and other members is less likely to occur, and an artificial leather base material having well-balanced fullness and suppleness or the like can be obtained.

Thus, a raw fabric of the fiber base material, which is an entangled non-woven fabric of the cationic dye-dyeable polyester that has been impregnated with the elastic polymer is obtained. The raw fabric of the fiber base material is finished by being sliced into a plurality of pieces in a direction perpendicular to the thickness direction or ground as needed so as to adjust the thickness. If necessary, the raw fabric may be finished into a napped fiber base material that has been napped by being buffed on at least on one surface by using sand paper or emery paper with a grit number of preferably about 120 to 600, more preferably about 320 to 600. The napped fiber base material becomes a suede-like or nubuck-like artificial leather.

Then, the fiber base material is dyed with a cationic dye, thereby obtaining an artificial leather base material dyed with a cationic dye. By dyeing the fiber base material with a cationic dye, excellent dyeing fastness is exerted as a result of the cationic dye being fixed by ionic bonding to the sulfonium ions that serve as the dye sites of the cationic dye of the cationic dye-dyeable polyester and are contained in the unit represented by the following formula

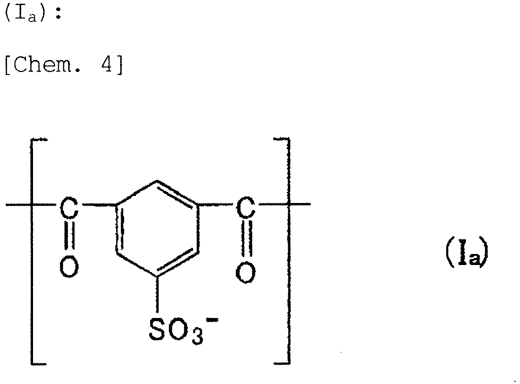

As the cationic dye, any conventionally known cationic dye may be used without any particular limitation. Note that the cationic dye is dissolved in a dye liquid to become a dye ion exhibiting cationic properties, for example, a dye ion including a quaternary ammonium group or the like, and is ionically bonded to the cationic dye-dyeable polyester fibers. In general, such a cationic dye forms a salt with an anion such as a chlorine ion. This anion such as a chlorine ion is contained in the cationic dye, but will be washed off by washing performed after dyeing. Specific examples of the cationic dye include: azo-based blue cationic dyes such as a C.I. Basic Blue 54 and C.I. Basic Blue 159; oxazine-based blue cationic dyes such as C.I. Basic Blue 3, C.I. Basic Blue 6, C.I. Basic Blue 10, C.I. Basic Blue 12, C.I. Basic Blue 75, and C.I. Basic Blue 96; coumarin-based dyes such as C.I. Basic Yellow 40; methine-based dyes such as C.I. Basic Yellow 21; azomethine-based dyes such as C.I. Basic Yellow 28; azo-based red dyes such as C.I. Basic Red 29 and C.I. Basic Red 46; and xanthene-based dyes such as C.I. Basic Violet 11. These may be used alone or in a combination of two or more.

The dyeing method is not particularly limited, and examples thereof include methods in which dyeing is performed using a dyeing machine such as a jet dyeing machine, a beam dyeing machine, or a jigger. As for the conditions for dyeing processing, dyeing may be performed at a high pressure, but it is preferable to perform dyeing at normal pressure, because the environmental load is low, and the dyeing cost can be reduced. In the case of performing dyeing at normal pressure, the dyeing temperature is preferably 60 to 100°C, more preferably 80 to 100°C. During dyeing, a dyeing assistant such as acetic acid or mirabilite may be used.

In the case of dyeing the fiber base material with a cationic dye, the concentration of the cationic dye in a dye liquid is in the range of preferably 0.05 to 20% owf, more preferably 0.1 to 15% owf, particularly preferably 0.5 to 20% owf, quite particularly preferably 1.0 to 15% owf, relative to the fiber base material to be dyed, because the color of the cationic dye-dyeable polyester fibers is sufficiently developed in a dark color, and the cationic dye becomes less likely to migrate to other members. When the concentration of the cationic dye in the dye liquid is too high, a large amount of the cationic dye that is not fixed to the dye sites of the cationic dye-dyeable polyester fibers is contained, so that the cationic dye tends to migrate to other members. When the concentration of the cationic dye is too low, it tends to be difficult to color the fiber base material in a dark color such as a color with a lightness L* value of ≤ 50.

It is preferable that the fiber base material dyed with a cationic dye is subjected to a washing treatment in a hot water bath containing an anionic surfactant, thereby removing a cationic dye having a low bonding strength. With such a washing treatment, the cationic dye having a low bonding strength is sufficiently removed, and other members such as a resin layer that is stacked and a molded body to be decorated are less likely to be contaminated with the cationic dye contained in the artificial leather base material. Specific examples of the anionic surfactant include Sordine R manufactured by NISSEI KASEI CO. LTD., SENKANOL A-900 manufactured by SENKA corporation, and Meisanol KHM manufactured by Meisei Chemical Works, Ltd.

The washing treatment in the hot water bath containing an anionic surfactant is performed in a hot water bath at preferably 50 to 100°C, more preferably 60 to 80°C. As the bath for the hot water bath, it is preferable to use the dyeing machine with which the dyeing treatment has been performed, because the production process can be simplified. The washing is performed for preferably about 10 to 30 minutes, more preferably about 15 to 20 minutes. Also, the washing is repeated once or more, preferably twice or more. The fiber base material dyed with a cationic dye is dried after being washed.

The fiber base material dyed with a cationic dye may be further subjected to various finishing treatments as needed. Examples of the finishing treatment include a flexibilizing treatment by crumpling, a reverse seal brushing treatment, an antifouling treatment, a hydrophilization treatment, a lubricant treatment, a softener treatment, an antioxidant treatment, an ultraviolet absorber treatment, a fluorescent agent treatment, and a flame retardant treatment. Thus, an artificial leather base material dyed with a cationic dye is obtained.

It is preferable that the fiber base material dyed with a cationic dye is sufficiently washed by the above-described washing such that the washable chlorine in the cationic dye is about 90 ppm or less, relative to the weight of the resulting artificial leather base material, because the cationic dye becomes less likely to migrate to other members. The artificial leather base material dyed with a cationic dye contains preferably 0.05 to 20 parts by mass, more preferably 0.1 to 15 parts by mass, particularly preferably 0.5 to 10 parts by mass, quite particularly preferably 1.0 to 10 parts by mass of the cationic dye, per 100 parts by mass of the fiber base material. When the cationic dye content per 100 parts by mass of the fiber base material is too large, the amount of the dye that is not bonded to the dye sites of the cationic dye-dyeable polyester fibers increases, so that the cationic dye tends to be likely to migrate to other members. On the other hand, when the cationic dye content is too small, it becomes difficult to color the fiber base material in preferably a dark color with a lightness L* value of ≤ 50, more preferably a dark color with an L* value of ≤ 35.

Preferably, the artificial leather base material dyed with a cationic dye according to the present embodiment has the following properties. Specifically, it is preferable that the cotton stain in a water fastness test in accordance with a JIS method (JIS L 0846) is determined to be grade 4-5 or more. When the cotton stain of the artificial leather base material in the water fastness test is determined to be grade 4-5 or more, the artificial leather base material contains a small amount of the cationic dye that is not ionically bonded, which is likely to be detached by coming into contact with water, so that the cationic dye is inhibited from migrating to other members.

The artificial leather base material dyed with a cationic dye according to the present embodiment has a grade of color difference, determined in an evaluation of color migration to a white polyvinyl chloride film with a thickness of 0.8 mm under a load of 750 g/cm² at 50°C for 16 hours, of preferably 4 or more, more preferably 5 or more. Furthermore, in the artificial leather base material dyed with a cationic dye according to the present embodiment, when a white polyurethane film with a thickness of 250 µm is pressure-bonded under heating to a surface of the artificial leather base material via a polyurethane adhesive under 5 Kg/cm² at 130°C for 1 minute to form a resin layer-equipped artificial leather, and the resin layer-equipped artificial leather is pressurized under heating under 20 Kg/cm² at 150°C for 1 minute, the artificial leather has a grade of color difference of the white polyurethane film, of preferably 3 or more, more preferably 4 or more. With such an artificial leather base material, it is possible to achieve high dyeing fastness that makes the cationic dye less likely to migrate to other members.

Furthermore, the artificial leather base material dyed with a cationic dye according to the present embodiment has a grade of color difference, determined in an evaluation of color migration using methyl ethyl ketone (MEK), of preferably 2 or more, more preferably 3 or more, because the cationic dye is less likely to be isolated when it comes into contact with a solvent, so that high dyeing fastness that makes the cationic dye less likely to contaminate other members even in an application in which the artificial leather base material is integrated with a resin layer using an adhesive or the like.

The thickness of the artificial leather base material dyed with a cationic dye is not particularly limited, and is preferably 0.2 to 4 mm, more preferably 0.3 to 1.8 mm, because a flexible texture can be achieved. The softness of the artificial leather base material, which is measured in the manner described below, is preferably 2.0 to 6.0 mm, more preferably 2.5 to 5.0 mm, because a flexible texture can be achieved. The product of the softness and the thickness is preferably 2 or more, more preferably 2.5 or more, because well-balanced thickness and texture can be achieved, resulting in an elegant texture suitable for an artificial leather product. The apparent density of the artificial leather base material is preferably 0.3 to 0.6 g/cm³ or more, particularly preferably 0.45 to 0.55 g/cm³ or more, because a flexible texture can be achieved.

The artificial leather base material dyed with a cationic dye according to the present embodiment is less likely to cause contamination of the resin layer and a molded body to be decorated, which will be described below, with a cationic dye even when the artificial leather base material is colored in a dark color such as a color with an L* value of ≤ 50. Although the artificial leather base material dyed with a cationic dye has an L* value of ≤ 50, the effects of the present invention become prominent particularly when the artificial leather base material is colored in a dark color such as a color with an L* value of ≤ 35. Note that for an L* value of ≤ 35, the cationic dye-dyeable polyester fibers and the elastic polymer may be colored with a pigment such as carbon black, in addition to being dyed with a cationic dye so as to have an L* value of ≤ 35. With such an artificial leather base material, even when it is dark colored, it is possible to sufficiently inhibit the cationic dye from contaminating other member by using the above-described cationic dye-dyeable polyester fibers, and performing a washing treatment in a hot water bath containing an anionic surfactant, thereby adjusting the content of the cationic dye to the above-described content.

The artificial leather base material dyed with a cationic dye according to the present embodiment described thus may be finished into a suede-like or nubuck-like napped artificial leather by napping the fibers on the surface thereof, or may be finished into a resin layer-equipped artificial leather by providing a resin layer on the surface thereof. Alternatively, the artificial leather base material may be used as an artificial leather product such as shoes for which the artificial leather base material is integrated with a resin molded body such as an outsole, or may be used as a decorating sheet that is to be integrated with a molded body to be decorated used for production of a decorative molded body such as a casing of a mobile device. An example of such applications will be specifically described in detail below.

First, a description will be given of a resin layer-equipped artificial leather in which a resin layer is stacked and integrated on at least one surface of an artificial leather base material dyed with a cationic dye.

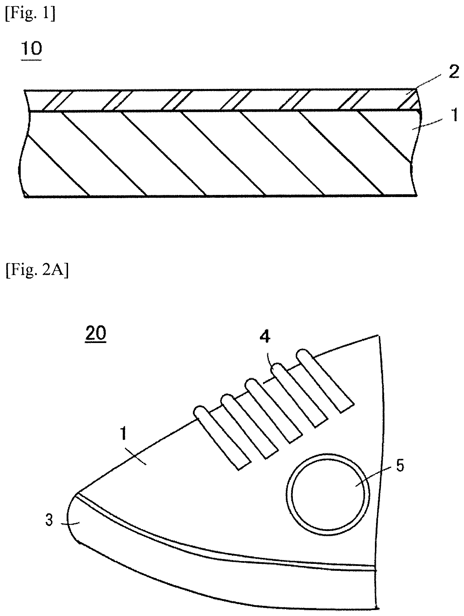

FIG. 1 is a schematic cross-sectional view of a resin layer-equipped artificial leather 10 including an artificial leather base material 1. The resin layer-equipped artificial leather 10 includes an artificial leather base material 1, and a resin layer 2 stacked on one surface of the artificial leather base material 1. The artificial leather base material 1 is an artificial leather base material as described above that includes a surface with a lightness L* value of ≤ 50, and a fiber base material including cationic dye-dyeable polyester fibers and an elastic polymer, the artificial leather base material 1 being dyed with at least one cationic dye. Examples of the resin layer 2 include layers that have been used for forming the resin layers of the conventionally known resin layer-equipped artificial leathers, namely, layers composed mainly of polyurethane, an acrylonitrile elastomer, an olefin elastomer, a polyester elastomer, a polyamide elastomer, an acrylic elastomer or the like.

In such a resin layer-equipped artificial leather 10, even when a white or light-color resin layer 2 such as the one having an L* value of > 50, preferably an L* value >70, is formed, the resin layer 2 is less likely to be contaminated by the cationic dye included in the artificial leather base material 1. For the resin layer-equipped artificial leather 10, the lightness difference ΔL* in L* value between the artificial leather base material 1 and the resin layer 2 is preferably 10 or more, more preferably 20 or more, particularly preferably 30 or more, because a high-contrast appearance having an excellent design quality can be achieved.

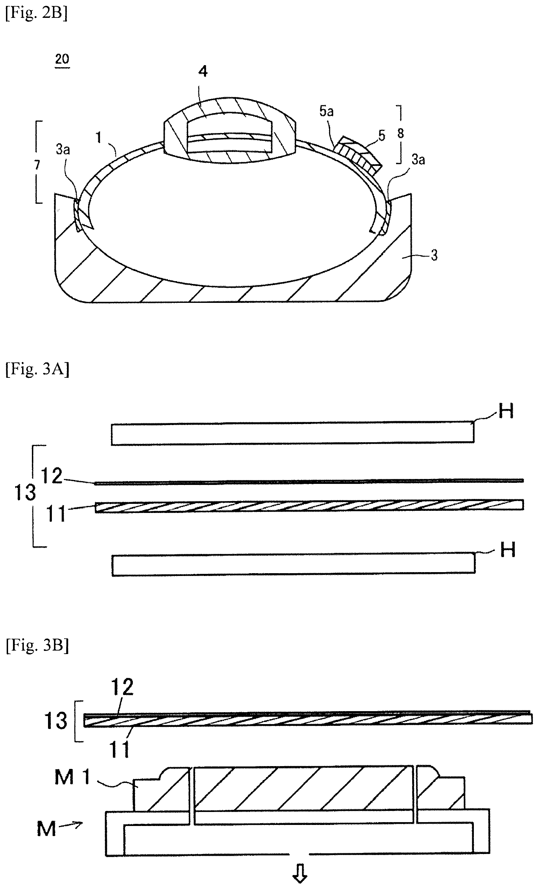

FIG. 2A is a schematic diagram showing the appearance of an upper portion of a shoe 20 that uses the artificial leather base material 1 as an upper material. FIG. 2B is a schematic cross-sectional view of the upper portion of the shoe 20. As shown in FIG. 2B, in the shoe 20, end portions of the artificial leather base material 1 are bonded to and integrated with a rubber sole 3 made of a rubber, which is a light-color resin layer with an L* value of > 50, with adhesive layers 3a, to form a resin layer-equipped artificial leather 7. A patch 5, which is a light-color resin layer with an L* value of > 50, is bonded to the surface of the artificial leather base material 1 with an adhesive layer 5a, to form a resin layer-equipped artificial leather 8.

The resin layer-equipped artificial leather 7 refers to a region having a structure that includes the artificial leather base material 1 dyed with a cationic dye that has a lightness L* value of ≤ 50, the light-color or white rubber sole 3 made of a rubber that has an L* value of > 50 and is integrated with the end portions of the artificial leather base material 1 with the adhesive layers 3a. The resin layer-equipped artificial leather 8 refers to a region including the artificial leather base material 1, and the patch 5, which is a light-color or white resin layer that has an L* value of > 50 and is bonded to and integrated with the surface of the artificial leather base material 1 with the adhesive layer 5a. Such resin layer-equipped artificial leathers 7 and 8, even when they are bonded to and integrated with the white or light-color rubber sole 3 or patch 5, such as those having an L* value of > 50, preferably an L* value >70, the cationic dye included in the dark-color artificial leather base material 1 is less likely to contaminate the rubber sole 3 and the patch 5. For such resin layer-equipped artificial leathers 7 and 8, ΔL*, which is a difference in L* value between the artificial leather base material 1 and the rubber sole 3 or the patch 5, is preferably 10 or more, more preferably 20 or more, particularly preferably 30 or more, because of the excellent design quality due to a color with an excellent contrast.

Next, a description will be given of a method for producing a decorative molded body having a three-dimensional shape by integrating, with the surface of a molded body to be decorated, a decorating sheet including an artificial leather base material dyed with a cationic dye. In the production method of the decorative molded body according to the present embodiment, a preform molded body obtained by molding a decorating sheet into a three-dimensional shape by preform molding is produced in advance.

Frist, a method for molding a preform molded body using vacuum molding will be described in detail with reference to FIGS. 3A to 3F. Note that a molding method such as vacuum pressure molding, pressure molding, or hot-press molding may be used in place of vacuum molding.

As shown in FIG. 3A, a non-air-permeable thermoplastic resin sheet 12 is placed on a decorating sheet 11, which is a napped artificial leather including an artificial leather base material dyed with a cationic dye, to form a superposed body 13. The decorating sheet 11, which is a napped artificial leather, is air-permeable, and thus cannot be directly subjected to vacuum molding. In the present embodiment, the thermoplastic resin sheet 12 is placed on the decorating sheet 11 in order to temporarily impart airtightness to the decorating sheet 11 in vacuum molding.

As the thermoplastic resin sheet, it is possible to use any sheet or film that is softened by heating during vacuum molding so as to be provided with a shape, is capable of maintaining airtightness without a pinhole or the like, and can be selectively detached in a later step, without any particular limitation. Examples of the thermoplastic resin for forming such a thermoplastic resin sheet include amorphous thermoplastic resins such as a (meth)acrylic resin, and crystalline thermoplastic resins having a low melting point, including, for example, polyolefin resins such as polyethylene and polypropylene. The thickness of the thermoplastic resin sheet is preferably about 10 to 300 µm, more preferably about 15 to 200 µm, particularly preferably about 30 to 100 µm. When the thermoplastic resin sheet is too thick, the shaping properties of the decorating sheet 11 tend to be reduced. When the thermoplastic resin sheet is too thin, it tends to be difficult to detach the thermoplastic resin sheet 12 from the decorating sheet 11 after preform molding.

As shown in FIG. 3A, the superposed body 13 is softened by being heated with heaters H. The heating temperature with the heaters H is a temperature that allows the shape of the superposed body 13 to be changed so as to follow the shape of a mold M1 of a vacuum molding machine M shown in FIG. 3B, without causing complete melting, and can be selected from the range of 100 to 180°C, for example.

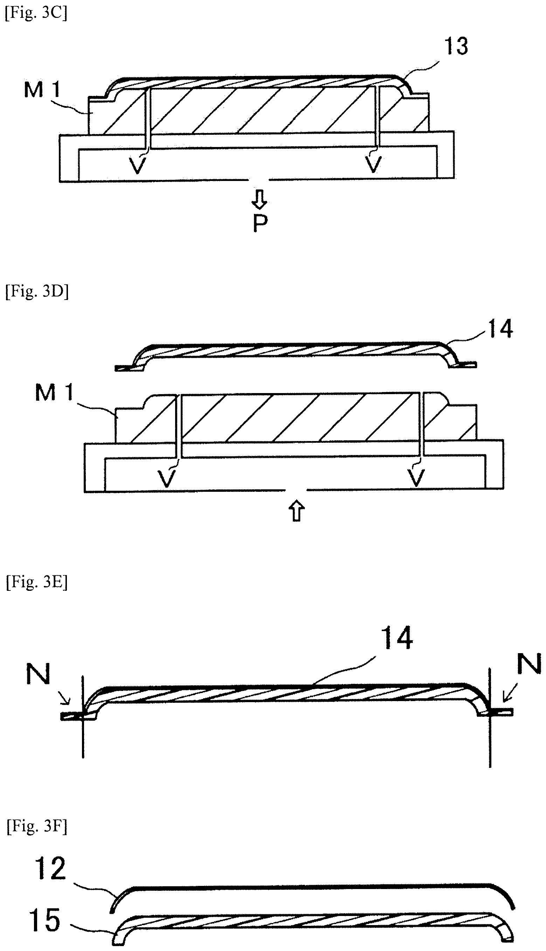

The heated and softened superposed body 13 is subjected to vacuum molding. Specifically, the heated and softened superposed body 13 is disposed so as to cover the mold M1 of the vacuum molding machine M shown in FIG. 3B. Then, as shown in FIG. 3C, the softened superposed body 13 is brought into close contact with the mold M1 of the vacuum molding machine M, and the air between the superposed body 13 and the mold M1 is discharged by a vacuum pump P from vacuum holes v formed in the mold M1, thereby causing the superposed body 13 to be adsorbed by the mold M1 so as to be tightly attached thereto with atmospheric pressure. Then, the shaped superposed body 13 is cooled and solidified.

Then, as shown in FIG. 3D, a preform molded body 14 is released from the mold M1. As shown in FIG. 3E, unnecessary portions N of the preform molded body 14 are trimmed as needed.

Then, as shown in FIG. 3F, the thermoplastic resin sheet 12 is detached, to give a preform molded body 15.

The preform molded body 15 thus obtained is integrated with a molded body to be decorated, to form a decorative molded body. Examples of the method for integrating the preform molded body with a molded body to be decorated include in-molding in which the preform molded body is integrated with a molded body to be decorated, which is a resin molded body molded by injection molding, and a method in which a molded body to be decorated that is molded in advance is bonded to one surface of the preform molded body via an adhesive.

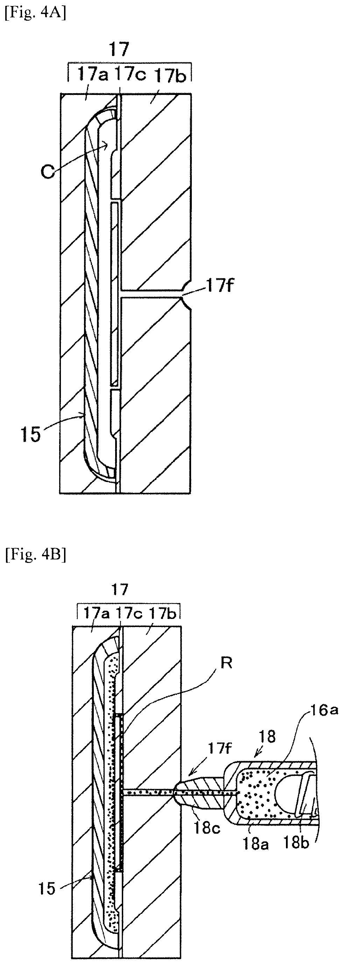

A method for producing a decorative molded body by in-molding will be described with reference to FIGS. 4A to 4D. Although a method for performing in-molding using a preform molded body 15 from which the thermoplastic resin sheet 12 has been detached will be described in the present embodiment, a preform molded body 15 with the thermoplastic resin sheet 12 attached thereto may be subjected to in-molding, and, thereafter, the thermoplastic resin sheet 12 may be detached.

As shown in FIG. 4A, a mold 17 includes a movable mold 17a having a cavity C, and a fixed mold 17b. In addition, a stripper plate 17c is disposed between the movable mold 17a and the fixed mold 17b. First, the preform molded body 15 is disposed in the cavity C.

Although the method for disposing the preform molded body 15 in the cavity C is not particularly limited, it is preferable that the preform molded body 15 is fixed to the cavity C for the purpose of positioning. When the preform molded body 15 is not fixed to the cavity C, there is the possibility that the preform molded body 15 may be positionally displaced in the cavity C with the flowing of the injected resin during injection molding in the subsequent step. Specific examples of the method for fixing the preform molded body 15 to the cavity C include a method in which the preform molded body 15 is fixed to the surface of the movable mold with a pressure-sensitive adhesive, and a method in which the preform molded body 15 is fixed by fitting a hole portion or a recess included in the shape of the preform molded body 4 to a core of the movable mold that matches the shape of the hole portion or the recess.

Then, as shown in FIG. 4B, molten resin 16a is injected into the cavity C by injection molding, thereby molding an in-molded body, which is a decorative molded body in which the preform molded body 15 is integrated on the surface thereof. More specifically, the movable mold 17a and the fixed mold 17b are closed, then a cylinder 18a of an injection molding machine 18 is advanced until a nozzle 18c comes into contact with a sprue bushing 17f of the fixed mold 17b, and the molten resin 16a molten in the cylinder 18a of the injection molding machine is injected with a screw 18b, thereby injecting the molten resin 16a into the cavity C of the mold 17. The injected molten resin 16a flows into the cavity C through a resin flow path R inside the mold 17, and is charged into the cavity C. At this time, the molten resin 16a appropriately permeates the preform molded body 15, so that the injection-molded body, which is the molded body 16 to be decorated molded by injection molding, is integrated with the preform molded body 15 so as to maintain high adhesion due to an anchoring effect.

As the resin for forming the injection-molded body molded by in-molding include various thermoplastic resins, including, for example, an ABS resin, a polycarbonate resin, polyolefin resins such as polypropylene, polyester resins such as polyethylene terephthalate (PET) and polybutylene terephthalate, and various polyamide resins can be used without any particular limitation, and these resins are appropriately selected according to the application. For example, resins having excellent impact resistance, such as an ABS resin, a polycarbonate resin, and a polyolefin resin such as polypropylene are suitably used as the resin for use in the casings of a mobile phone, a mobile device, a home electrical appliance and the like.

As the conditions for the injection molding, conditions (resin temperature, mold temperature, injection pressure, injection speed, holding pressure after injection, cooling time) that allow the resin to flow to the flow terminal end may be selected as appropriate according to the melting point and the melt viscosity of the injected resin, the shape of the molded body, and the resin thickness.

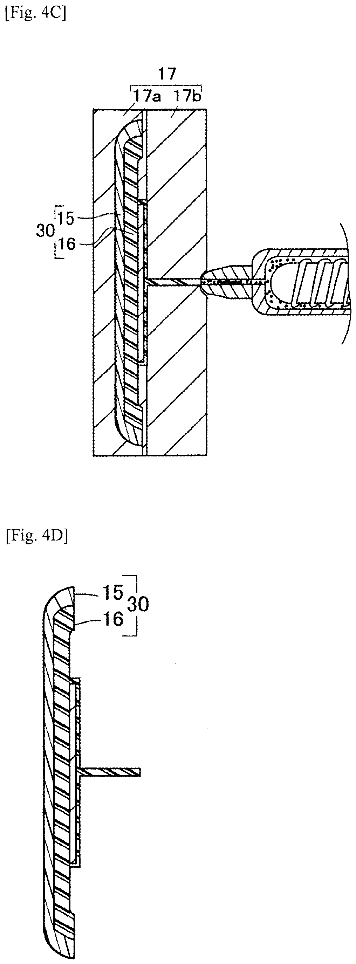

Then, after completion of the injection, the molten resin 16a is cooled, to form an injection-molded body, which is the molded body 16 to be decorated, as shown in FIG. 4C. Thus, a decorative molded body 30 in which the preform molded body 15 is integrated with the molded body 16 to be decorated is molded. Then, by opening the mold 17, the movable mold 17a and the fixed mold 17b are separated from each other. Then, a decorative molded body 30 as shown in FIG. 4D is taken out. Thus, the decorative molded body 30 in which the molded body 16 to be decorated, which is an injection-molded body, is integrated with one surface of the preform molded body 15 is obtained.

In the decorative molded body thus obtained, a napped artificial leather including an artificial leather base material dyed with a cationic dye is stacked and integrated on the surface layer. In such a decorative molded body, the contamination by the cationic dye due to heating during production or use is suppressed even when a light-color or white, or transparent molded body to be decorated such as the one with a lightness L* value of > 50, or even a lightness L* value of > 70 is used. In the decorative molded body, ΔL*, which is a difference in L* value between the decorating sheet and the molded body to be decorated, is preferably 10 or more, more preferably 20 or more, particularly preferably 30 or more, because of the excellent design quality due to a color with an excellent contrast. Such a decorative molded body can be suitably used as the casings of a mobile phone, a smartphone, various mobile devices, a home electrical appliance and the like, the interior members of a vehicle, an aircraft and the like, and the exterior members of a building material, an article of furniture and the like.

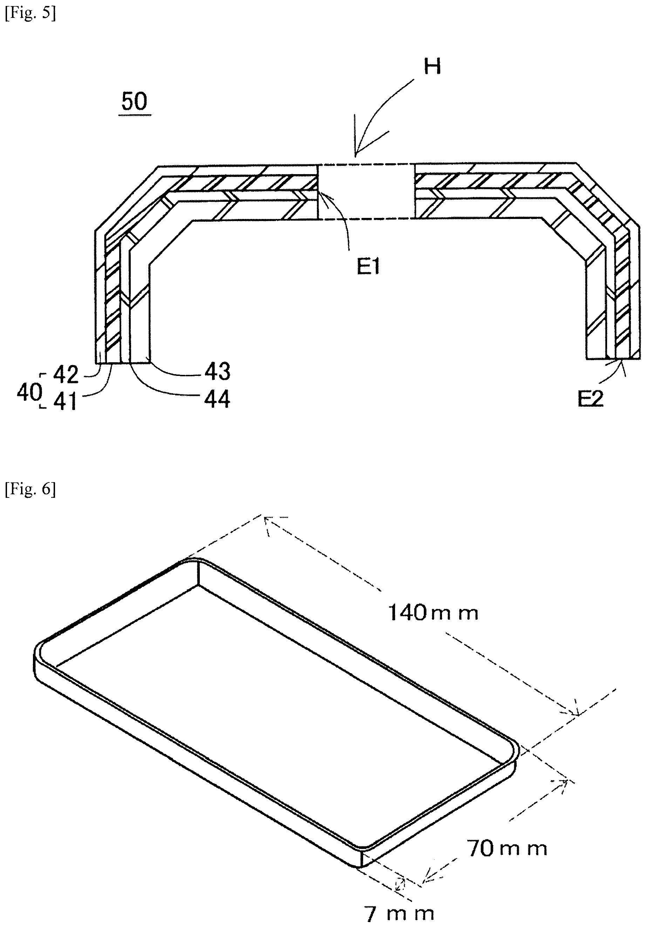

Furthermore, FIG. 5 is a schematic cross-sectional view of a decorative molded body 50 including a resin layer-equipped artificial leather 40 that uses an artificial leather base material 41 including a surface with a lightness L* value of ≤ 50, and a fiber base material including cationic dye-dyeable polyester fibers and an elastic polymer, the resin layer-equipped artificial leather 40 being dyed with a cationic dye. In FIG. 5, the artificial leather base material 41 dyed with a cationic dye that has a lightness L* value of ≤ 50 is finished into a resin layer-equipped artificial leather 40 by stacking and integrating a resin layer 42 on the surface thereof. Then, the artificial leather base material 41 is bonded to a resin molded body 43 via an adhesive layer 44. The decorative molded body 50 has an opening H. A cross section E1 of the opening H and an end face E2 of the decorative molded body 50 are exposed to the outside, and constitute portions that can be visually recognized by the user.

Since the wall surface of the opening H of the decorative molded body 50 and the end face E2 of the decorative molded body 50 constitute portions that can be visually recognized by the user, the fiber base material included in the artificial leather base material 41 may be required to be colored, from the viewpoint of design quality. When the artificial leather base material 41 as described above is used to produce such a decorative molded body 50, the cationic dye is less likely to migrate from the dark-color artificial leather base material 41 to the resin layer 42 and the resin molded body 43.

### [Examples]

Hereinafter, the present invention will be described more specifically by way of examples. It should be appreciated that the scope of the present invention is by no means limited by the examples.

### <Examples of Napped Artificial Leather and Resin Layer-Equipped Artificial Leather>

### [Example 1]

A non-woven fabric obtained by three-dimensionally entangling continuous, island-in-the-sea composite fibers was produced, with the non-woven fabric including ethylene-modified polyvinyl alcohol (PVA; ethylene unit content: 8.5 mol%, polymerization degree: 380, saponification degree: 98.7 mol%) as a thermoplastic resin serving as a sea component, and polyethylene terephthalate (PET) modified with a tetrabutylphosphonium salt of sulfoisophthalic acid (containing 1.7 mol% of a tetrabutylphosphonium salt unit of sulfoisophthalic acid, 5 mol% of a 1,4-cyclohexane dicarboxylic acid unit, 5 mol% of an adipic acid unit; glass transition temperature: 62°C) as a thermoplastic resin serving as an island component, and the mass ratio between the sea component and the island component being sea component/island component = 25/75.

Then, the non-woven fabric obtained by three-dimensionally entangling the island-in-the-sea composite fibers was impregnated with a polyurethane emulsion (emulsion composed mainly of polycarbonate/ether polyurethane with a polyurethane solid concentration of 30%), and was dried in a drying furnace at 150°C, thereby applying polyurethane to the non-woven fabric. Then, the sea component included in the island-in-the-sea composite fibers was removed by extraction by immersing the non-woven fabric in which the island-in-the-sea composite fibers to which polyurethane had been applied were three-dimensionally entangled in hot water at 95°C for 20 minutes, and the non-woven fabric was dried in a drying furnace at 120°C, thereby obtaining a fiber base material including the non-woven fabric of the cationic dye-dyeable polyester fibers with a fineness of 0.2 dtex that had been impregnated with polyurethane. The obtained fiber base material had a mass ratio of non-woven fabric /polyurethane of 90/10. Then, the fiber base material was sliced into halves, and the surface thereof was napped by being buffed with sand paper with a grit number of 600. The napped fiber base material had a fineness of 0.2 dtex, a polyurethane ratio of 10 mass%, a thickness of 0.78 mm, and an apparent density 0.51 g/cm³.

Then, the napped fiber base material was dyed into red by being immersed in a dyeing bath storing a 90°C dye liquid containing 19% owf of Nichilon Red-GL (manufactured by NISSEI KASEI CO., LTD.) as a cationic dye and 1 g/L of 90% acetic acid as a dyeing assistant at a bath ratio of 1:30 for 40 minutes. Then, the step of soaping the napped fiber base material in the same dyeing bath at 70°C using a hot water bath containing 2 g/L of Sordine R as an anionic surfactant was repeated twice. Then, after the soaping, the napped fiber base material was dried, thereby obtaining a dyed suede-like artificial leather.

Thus, a dark-red suede-like artificial leather (suede-like artificial leather base material) including a non-woven fabric of cationic dye-dyeable polyester fibers with a fineness of 0.2 dtex was obtained. The obtained suede-like artificial leather had a thickness of 0.83 mm and an apparent density of 0.47 g/cm³. Then, various properties of the suede-like artificial leather were evaluated as follows.

### (Cationic Dye Content of Suede-like Artificial Leather)

The cationic dye content of the suede-like artificial leather was quantitatively determined by the following method.

Before dyeing the napped fiber base material, the prepared dye liquid was collected, and five diluted dye liquids at different concentrations with dilution ratios of 10 to 100 were prepared. Then, the absorbance for the region with a wavelength of 380 to 780 nm of each of the five diluted dye liquids was measured with a spectrophotometer (U-3010 manufactured by Hitachi High-Tech Science Corporation) for every 1 nm, and the measured values were added up, thereby creating a calibration curve of the absorbance with respect to the dye concentration (g/L). The dye liquid (residual dye liquid) in the dyeing bath after dyeing was collected, and the absorbance for the region with a wavelength of 380 to 780 nm was measured for every 1 nm, and the measured values were added up, thereby determining the dye concentration C (g/L) of the residual dye liquid from the calibration curve. The dye concentration C1 (g/L) in the cleaning solution after the first soaping and the dye concentration C2 (g/L) in the cleaning solution after the second soaping were determined in the same manner.

The mass of the dyed napped fiber base material is represented as S (g), the amount of the dye dissolved in the dye liquid to achieve the target owf% is represented as P (g), and the amount of the liquid used when the bath ratio to the napped fiber base material was adjusted is represented as W(L). Also, the amount of the liquid used for the first soaping is represented as W1 (L), and the dye removal amount P1 (g) by the first soaping was calculated from the equation: P1 = W1 × C1. The dye removal amount P2 (g) by the second soaping was also calculated in the same manner.

Then, the attached amount of the cationic dye was calculated as the cationic dye content per 100 parts by mass of the napped fiber base material from the equation: attached amount X (g) = 100 × (P-C × W - (P1 + P2))/S.

### (L^{*} value)

Using a spectrophotometer (CM-3700 manufactured by Minolta), the lightness L^{*} was determined in accordance with JIS Z 8729 from the coordinate values of the L^{*}a^{*}b* color system on the surface of a cut-out piece of the suede-like artificial leather. The value was an average of the values for three points evenly selected from average positions of the test piece.

### (Thickness)

The thickness of the suede-like artificial leather was measured in accordance with a JIS method. Using a thickness measurement instrument, the thicknesses of five different portions of the sample were measured under the pressurization condition of a load of 23.5 KPa for 10 seconds, and an average value of the measured thicknesses was calculated, after which the value was rounded at the third decimal place.

### (Softness)

The bending resistance of the suede-like artificial leather was measured using a softness tester (leather softness measuring instrument ST 300: manufactured by the United Kingdom, MSA Engineering Systems Limited). Specifically, a predetermined ring with a diameter of 25 mm was set on a lower holder of the device, and thereafter, the suede-like artificial leather was set on the lower holder. Then, a metal pin (diameter: 5 mm) fixed to an upper lever was pressed down toward the suede-like artificial leather. Then, the upper lever was pressed down, and the value at the time when the upper lever was locked was read. Note that the value indicated the penetration depth, and the larger the value, the suppler the leather was.

### (Color Migration to Polyvinyl Chloride (PVC) Film by Pressurization under Heating)

A polyvinyl chloride film (white, ΔL*=85.0) with a thickness of 0.8 mm was placed on top of the surface of a cut-out piece of the suede-like artificial leather, and was uniformly pressurized such that a load of 750 g/cm² was applied. Then, the film was left for 16 hours at 50°C under an atmosphere of a relative humidity of 15%. Then, the color difference ΔE* between the polyvinyl chloride film before color migration and the polyvinyl chloride film after color migration was measured using a spectrophotometer, and the measured value was evaluated according to the following criteria:
Grade 5: 0.0 ≤ ΔE* ≤ 0.2
Grade 4-5: 0.2 < ΔE* ≤ 1.4
Grade 4: 1.4 < ΔE* ≤ 2.0
Grade 3-4: 2.0 < ΔE* ≤ 3.0
Grade 3: 3.0 < ΔE* ≤ 3.8
Grade 2-3: 3.8 < ΔE* ≤ 5.8
Grade 2: 5.8 < ΔE* ≤ 7.8
Grade 1-2: 7.8 < ΔE* ≤ 11.4
Grade 1: 11.4 < ΔE*

### (Color Migration Test using Solvent (Methyl Ethyl Ketone (MEK)))

The suede-like artificial leather is cut out into a piece of 2.45 cm long by 2.45 cm wide, and the cut-out piece was sandwiched between the surfaces of measurement white cloths, and the cut-out piece and the measurement white cloth were stapled together at four locations on the upper, lower, left and right sides, to produce a test base material. Then, the test base material is immersed in MEK placed in a glass container for 20 seconds, and thereafter taken out, and air-dried. After the drying, the state of contamination to the measurement white cloth was evaluated. As for the evaluation, the most contaminated portion, regardless of whether it was located on the front or the back, was visually evaluated according to the JIS gray-scale standard, and rated using degrees 1 to 5.

### (Color Migration of Resin Layer-equipped Artificial Leather)

A polyurethane film (white, ΔL* = 92.9) with a thickness of 250 µm was pressure-bonded to the surface of the suede-like artificial leather via a polyurethane adhesive under 5 Kg/cm² at 130°C for 1 minute, to form a resin layer-equipped artificial leather. Then, the resin layer-equipped artificial leather was heat-treated under 20 Kg/cm² at 150°C for 1 minute. The color difference ΔE* of the urethane film before and after the heat treatment of the resin layer-equipped artificial leather was measured using a spectrophotometer, and evaluated according to the following criteria:
Grade 5: 0.0 ≤ ΔE* ≤ 0.2
Grade 4-5: 0.2 < ΔE* ≤ 1.4
Grade 4: 1.4 < ΔE* ≤ 2.0
Grade 3-4: 2.0 < ΔE* ≤ 3.0
Grade 3: 3.0 < ΔE* ≤ 3.8
Grade 2-3: 3.8 < ΔE* ≤ 5.8
Grade 2: 5.8 < ΔE* ≤ 7.8
Grade 1-2: 7.8 < ΔE* ≤ 11.4
Grade 1: 11.4 < ΔE*

### (Surface Touch)

The suede-like artificial leather was cut-out into a piece of 30 cm long by 20 cm wide, to prepare a sample. Then, the tactile impression of the surface when rubbed by the palm of a hand was evaluated according to the following criteria:
A: The surface had no irregularities or roughness, and a smooth and wet feel was observed.
B: The surface had some irregularities and roughness.
C: The surface had significant irregularities and roughness, and a dry feel was observed.

### (Texture)

The suede-like artificial leather was cut-out into a piece of 30 cm long by 20 cm wide, to prepare a sample. Then, the tactile impression of the sample when grabbed was evaluated according to the following criteria:
A: The sample was rounded, and created almost no sharp-edged creases when grabbed.
B: The sample showed some sharp-edged creases when grabbed.
C: The sample was in the state of being sharp-edged when grabbed, like a sheet of paper.

The results are shown in Table 1.

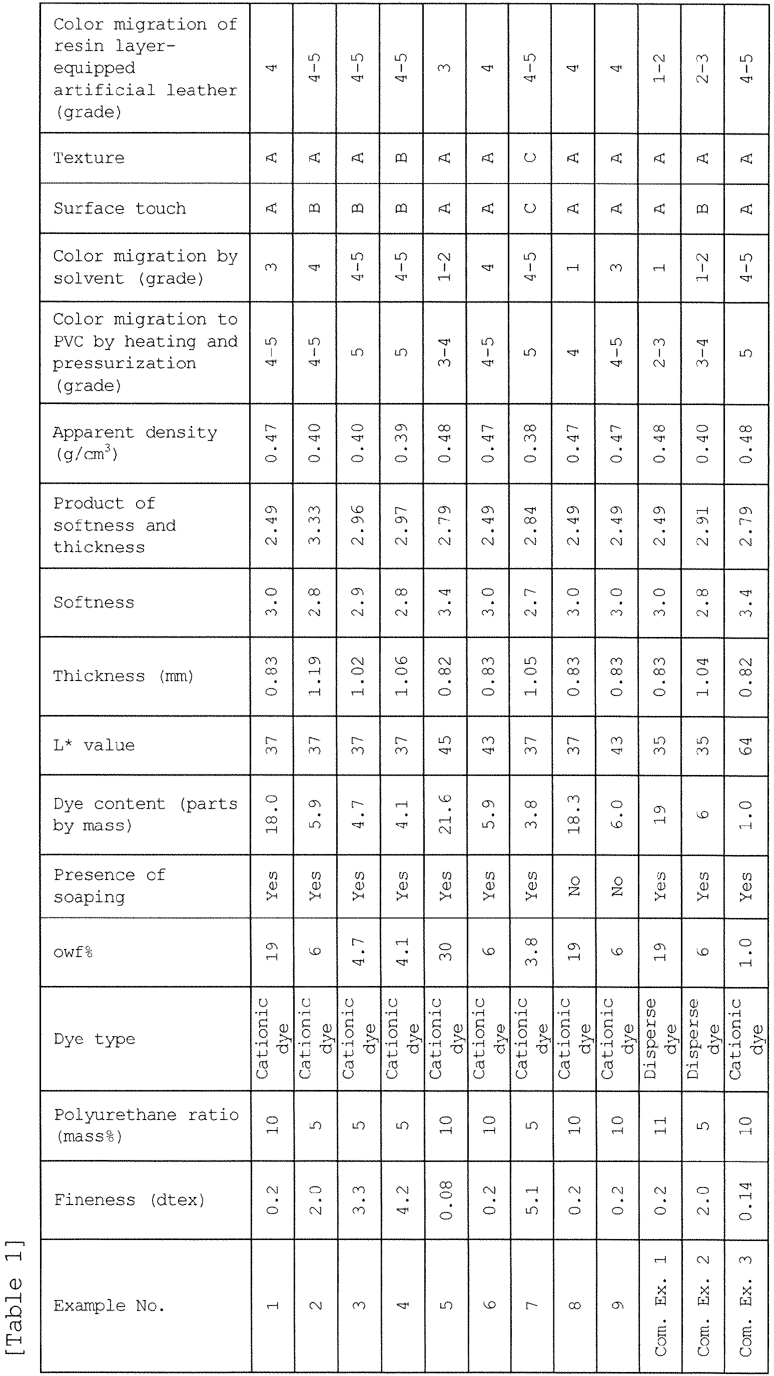

### [Example 2]

In place of the napped fiber base material produced in Example 1, a napped fiber base material was obtained in the same manner as in Example 1, except that the napped fiber base material included a non-woven fabric of cationic dye-dyeable polyester fibers with a fineness of 2.0 dtex, and had a polyurethane ratio of 5 mass%, a thickness of 0.82 mm, and an apparent density of 0.46 g/cm³. Then, the obtained napped fiber base material was dyed into red by being immersed in a 90°C dyeing bath containing 6% owf of Nichilon Red-GL (manufactured by NISSEI KASEI CO., LTD.) serving as a cationic dye, and 1 g/L of 90% acetic acid as a dyeing assistant at a bath ratio of 1:30 for 40 minutes. Then, the step of soaping the napped fiber base material in the same dyeing bath at 70°C using a hot water bath containing 2 g/L of Sordine R as an anionic surfactant was repeated twice. Then, after the soaping, the napped fiber base material was dried, thereby obtaining a dyed suede-like artificial leather. Thus, a dyed dark-red suede-like artificial leather including a non-woven fabric of cationic dye-dyeable polyester fibers with a fineness of 2.0 dtex was obtained. The obtained suede-like artificial leather had a thickness of 1.19 mm and an apparent density of 0.40 g/cm³. Then, various properties of the suede-like artificial leather were evaluated in the same manner as in Example 1. The results are shown in Table 1.

### [Example 3]

In place of the napped fiber base material produced in Example 1, a napped fiber base material was obtained in the same manner as in Example 1, except that the napped fiber base material included a non-woven fabric of cationic dye-dyeable polyester fibers with a fineness of 3.3 dtex, and had a polyurethane ratio of 5 mass%, a thickness of 0.75 mm, and an apparent density of 0.46 g/cm³. Then, the obtained napped fiber base material was dyed into red by being immersed in a 90°C dyeing bath containing 4.7% owf of Nichilon Red-GL (manufactured by NISSEI KASEI CO., LTD.) serving as a cationic dye, and 1 g/L of 90% acetic acid as a dyeing assistant at a bath ratio of 1:30 for 40 minutes. Then, the step of soaping the napped fiber base material in the same dyeing bath at 70°C using a hot water bath containing 2 g/L of Sordine R as an anionic surfactant was repeated twice. Then, after the soaping, the napped fiber base material was dried, thereby obtaining a dyed suede-like artificial leather. Thus, a dyed dark-red suede-like artificial leather including a non-woven fabric of cationic dye-dyeable polyester fibers with a fineness of 3.3 dtex was obtained. The obtained suede-like artificial leather had a thickness of 1.02 mm and an apparent density of 0.40 g/cm³. Then, various properties of the suede-like artificial leather were evaluated in the same manner as in Example 1. The results are shown in Table 1.

### [Example 4]

In place of the napped fiber base material produced in Example 1, a napped fiber base material including a non-woven fabric of cationic dye-dyeable polyester fibers with a fineness of 4.2 dtex, and having a polyurethane ratio of 5 mass%, a thickness of 0.75 mm, and an apparent density 0.45 g/cm³ was produced. Then, the obtained napped fiber base material was dyed into red by being immersed in a 90°C dyeing bath containing 4.1% owf of Nichilon Red-GL (manufactured by NISSEI KASEI CO., LTD.) serving as a cationic dye, and 1 g/L of 90% acetic acid as a dyeing assistant at a bath ratio of 1:30 for 40 minutes. Then, the step of soaping the napped fiber base material in the same dyeing bath at 70°C using a hot water bath containing 2 g/L of Sordine R as an anionic surfactant was repeated twice. Then, after the soaping, the napped fiber base material was dried, thereby obtaining a dyed suede-like artificial leather. Thus, a dyed dark-red suede-like artificial leather including a non-woven fabric of cationic dye-dyeable polyester fibers with a fineness of 4.2 dtex was obtained. The obtained suede-like artificial leather had a thickness of 1.06 mm and an apparent density of 0.39 g/cm³. Then, various properties of the suede-like artificial leather were evaluated in the same manner as in Example 1. The results are shown in Table 1.

### [Example 5]

In place of the napped fiber base material produced in Example 1, a napped fiber base material including a non-woven fabric of cationic dye-dyeable polyester fibers with a fineness of 0.08 dtex, and having a polyurethane ratio of 10 mass%, a thickness of 0.75 mm, and an apparent density 0.52 g/cm³ was produced. Then, the obtained napped fiber base material was dyed into red by being immersed in a 90°C dyeing bath containing 30% owf of Nichilon Red-GL (manufactured by NISSEI KASEI CO., LTD.) serving as a cationic dye, and 1 g/L of 90% acetic acid as a dyeing assistant at a bath ratio of 1:30 for 40 minutes. Then, the step of soaping the napped fiber base material in the same dyeing bath at 70°C using a hot water bath containing 2 g/L of Sordine R as an anionic surfactant was repeated twice. Then, after the soaping, the napped fiber base material was dried, thereby obtaining a dyed dark-red suede-like artificial leather. Thus, a dyed suede-like artificial leather including a non-woven fabric of cationic dye-dyeable polyester fibers with a fineness of 0.08 dtex was obtained. The obtained suede-like artificial leather had a thickness of 0.82 mm and an apparent density of 0.48 g/cm³. Then, various properties of the suede-like artificial leather were evaluated in the same manner as in Example 1. The results are shown in Table 1.

### [Example 6]

A napped fiber base material obtained in the same manner as in Example 1 was dyed in the same manner as in Example 1 except that dye concentration was changed from 19% owf to 6% owf, to obtain a dyed dark-red suede-like artificial leather. Then, various properties of the suede-like artificial leather were evaluated in the same manner as in Example 1. The results are shown in Table 1.

### [Example 7]

In place of the napped fiber base material produced in Example 1, a napped fiber base material including a non-woven fabric of cationic dye-dyeable polyester fibers with a fineness of 5.1 dtex, and having a polyurethane ratio of 5 mass%, a thickness of 0.78 mm, and an apparent density 0.44 g/cm³ was produced. Then, the obtained napped fiber base material was dyed into red by being immersed in a 90°C dyeing bath containing 3.8% owf of Nichilon Red-GL (manufactured by NISSEI KASEI CO., LTD.) serving as a cationic dye, and 1 g/L of 90% acetic acid as a dyeing assistant at a bath ratio of 1:30 for 40 minutes. Then, the step of soaping the napped fiber base material in the same dyeing bath at 70°C using a hot water bath containing 2 g/L of Sordine R as an anionic surfactant was repeated twice. Then, after the soaping, the napped fiber base material was dried, thereby obtaining a dyed suede-like artificial leather. Thus, a dyed dark-red suede-like artificial leather including a non-woven fabric of cationic dye-dyeable polyester fibers with a fineness of 5.1 dtex was obtained. The obtained suede-like artificial leather had a thickness of 1.05 mm and an apparent density of 0.38 g/cm³. Then, the suede-like artificial leather were evaluated in the same manner as in Example 1. The results are shown in Table 1.

### [Example 8]

A dyed dark-red suede-like artificial leather including a non-woven fabric of cationic dye-dyeable polyester fibers was obtained in the same manner as in Example 1, except that the napped fiber base material was washed with water at 70°C, instead of repeating twice the step of soaping the napped fiber base material at 70°C using a hot water bath containing 2 g/L of Sordine R as an anionic surfactant in Example 1. Then, the suede-like artificial leather was evaluated in the same manner as in Example 1. The results are shown in Table 1.

### [Example 9]

A dyed dark-red suede-like artificial leather including a non-woven fabric of cationic dye-dyeable polyester fibers was obtained in the same manner as in Example 6, except that the napped fiber base material was washed with water at 70°C, instead of repeating twice the step of soaping the napped fiber base material at 70°C using a hot water bath containing 2 g/L of Sordine R as an anionic surfactant in Example 6. Then, the suede-like artificial leather was evaluated in the same manner as in Example 1. The results are shown in Table 1.

### [Comparative Example 1]

A napped fiber base material including a non-woven fabric of polyester fibers with a fineness of 0.2 dtex for which isophthalic acid-modified PET (containing 6 mol% of an isophthalic acid unit) was used as a thermoplastic resin serving as an island component, and having a polyurethane ratio of 11 mass%, a thickness of 0.78 mm, and an apparent density of 0.51 g/cm³ was produced. Then, the fiber base material was jet-dyed with D. Red-W, Kiwalon Rubin 2GW, and Kiwalon Yellow 6GF serving as disperse dyes at 130°C for 1 hour, and reductively cleaned in the same dyeing bath, to obtain a dyed dark-red suede-like artificial leather. Then, the suede-like artificial leather was evaluated in the same manner as in Example 1. The results are shown in Table 1.

### [Comparative Example 2]

A fiber base material including a non-woven fabric of polyester fibers with a fineness of 2 dtex for which isophthalic acid-modified PET (containing 6 mol% of an isophthalic acid unit) was used as the thermoplastic resin serving as the island component, and having a polyurethane ratio of 5 mass%, a thickness of 0.78 mm, and an apparent density of 0.40 g/cm³ was produced. Then, the fiber base material was jet-dyed with D. Red-W, Kiwalon Rubin 2GW, and Kiwalon Yellow 6GF serving as disperse dyes at 130°C for 1 hour, and reductively cleaned in the same dyeing bath, to obtain a dyed dark-red suede-like artificial leather. Then, the suede-like artificial leather was evaluated in the same manner as in Example 1. The results are shown in Table 1.

### [Comparative Example 3]

In place of the fiber base material produced in Example 1, a napped fiber base material including a non-woven fabric of cationic dye-dyeable polyester fibers with a fineness of 0.14 dtex, and having a polyurethane ratio of 10 mass%, a thickness of 0.78 mm, and an apparent density 0.51 g/cm³ was produced. Then, the obtained fiber base material was dyed into red by being immersed in a 90°C dyeing bath containing 3.8% owf of Nichilon Red-GL (manufactured by NISSEI KASEI CO., LTD.) serving as a cationic dye, and 1 g/L of 90% acetic acid as a dyeing assistant at a bath ratio of 1:30 for 40 minutes. Then, the step of soaping the napped fiber base material in the same dyeing bath at 70°C using a hot water bath containing 2 g/L of Sordine R as an anionic surfactant was repeated twice. Then, after the soaping, the fiber base material was dried, thereby obtaining a dyed light-red suede-like artificial leather including a non-woven fabric of cationic dye-dyeable polyester fibers with a fineness of 0.14 dtex. The obtained suede-like artificial leather had a thickness of 0.82 mm and an apparent density of 0.48 g/cm³. Then, the suede-like artificial leather were evaluated in the same manner as in Example 1. The results are shown in Table 1.

### <Examples of Decorating Sheet and Decorative Molded Body>

### [Example 10]

A non-woven fabric obtained by three-dimensionally entangling continuous, island-in-the-sea composite fibers was produced, with the non-woven fabric including ethylene-modified polyvinyl alcohol (PVA; ethylene unit content: 8.5 mol%, polymerization degree: 380, saponification degree: 98.7 mol%) as a thermoplastic resin serving as a sea component, and polyethylene terephthalate (PET) modified with a tetrabutylphosphonium salt of sulfoisophthalic acid (containing 1.7 mol% of a tetrabutylphosphonium salt unit of sulfoisophthalic acid, 5 mol% of a 1,4-cyclohexane dicarboxylic acid unit, 5 mol% of an adipic acid unit; glass transition temperature: 62°C) as a thermoplastic resin serving as an island component, and the mass ratio between the sea component and the island component being sea component/island component = 25/75.

Then, the non-woven fabric obtained by three-dimensionally entangling the island-in-the-sea composite fibers was impregnated with a polyurethane emulsion (emulsion composed mainly of polycarbonate/ether polyurethane with a polyurethane solid concentration of 30%), and was dried in a drying furnace at 150°C, thereby applying polyurethane to the non-woven fabric. Then, the sea component was removed by extraction by immersing the non-woven fabric of the island-in-the-sea composite fibers to which polyurethane had been applied in hot water at 95°C for 20 minutes, and the non-woven fabric was dried in a drying furnace at 120°C, thereby obtaining a non-woven fabric of the cationic dye-dyeable polyester fibers that had been impregnated with polyurethane. The non-woven fabric to which polyurethane had been applied was sliced into halves, then the surface thereof was buffed with sand paper with a grit number of 600, and the non-woven fabric was thereby finished into a swede-like fiber base material. The fiber base material had a fineness of 0.08 dtex, a polyurethane content ratio of 10 mass%, a thickness of 0.5 mm, and an apparent density 0.55 g/cm³.

Then, the fiber base material was dyed into red by being immersed in a 90°C dye liquid containing 18% owf of Nichilon Red-GL (manufactured by NISSEI KASEI CO., LTD.) as a cationic dye and 1 g/L of 90% acetic acid as a dyeing assistant at a bath ratio of 1:30 for 40 minutes. Then, the step of soaping the fiber base material in the same dyeing bath at 70°C using a hot water bath containing 2 g/L of Sordine R as an anionic surfactant was repeated twice. Then, after the soaping, the fiber base material was dried, thereby obtaining a dark-red suede-like artificial leather dyed with a cationic dye.

Thus, a decorating sheet, which was a dyed dark-red suede-like artificial leather dyed with a cationic dye that included a fiber base material including a non-woven fabric of cationic dye-dyeable polyester fibers with 0.08 dtex and polyurethane was obtained. The suede-like artificial leather had a thickness of 0.55 mm and an apparent density of 0.50 g/cm³. The L* value was 36. Then, various properties of the suede-like artificial leather were evaluated as follows.

### (L^{*} value)

Using a spectrophotometer (CM-3700 manufactured by Minolta), the lightness L^{*} was determined in accordance with JIS Z 8729 from the coordinate values of the L^{*}a^{*}b* color system on the surface of a cut-out piece of the suede-like artificial leather. The value was an average of the values for three points evenly selected from average positions of the test piece.

### (Water Fastness)

A water fastness test for a cotton cloth in accordance with a JIS method (JIS L 0846) was performed. Specifically, a test piece of 6 cm by 6 cm was cut out from the suede-like artificial leather. Then, the test piece was immersed in water at room temperature, and thereafter attached to a sweat testing machine. The test piece was held in a dryer machine at 37±2°C for 4 hours under a load of about 45 N. Then, the fastness of the test piece was evaluated by making comparison with the contamination gray scale. Then, the grade at that time was determined.

Then, the obtained decorating sheet was molded using a mold having a cavity for obtaining a preform molded body. Specifically, the preform molded body was a saucer-shaped molded body having a height of 7 mm from the bottom surface to the outer surface, which simulated a smartphone cover, as shown in FIG. 6.

Specifically, a transparent acrylic sheet with a thickness of 75 µm was placed on one surface of the decorating sheet, to form a superposed body. Then, the superposed body was heated to a temperature of 150°C with an infrared heater, and was subjected to vacuum pressure molding at a predetermined air pressure using molds having various shapes. Through vacuum pressure molding, a preform molded body with a thermoplastic resin sheet in which the surface of the transparent acrylic sheet and the decorating sheet forming the superposed body were thermally compressed was obtained. Then, the transparent acrylic sheet was detached from the preform molded body with a thermoplastic resin sheet, to obtain a preform molded body.

Then, in-molding was performed using the obtained preform molded body. Specifically, an in-molding mold having a shape corresponding to the shape of the preform molded body was prepared. Then, the mold was mounted on an injection molding machine, and the preform molded body was disposed in a cavity of the mold. Then, a milk-white ABS resin (TOYOLAC ABS700 manufactured by Toray Industries Inc.) was injection-molded at a resin temperature of 240°C and a mold temperature of 50°C. A decorative molded body was obtained by performing in-mold in this manner. Note that the L^{*} value of the injection-molded body to be decorated was 92.

Another decorative molded body was also produced in the same manner except that a clear-color polycarbonate (Iupilon S2000 manufactured by Mitsubishi Engineering-Plastics Corporation) was used in place of the ABS resin, and that the conditions were changed such that the resin temperature was 280°C and the mold temperature was 80°C. The L^{*} value of the injection-molded decorated molded body was 93.

Then, the color migration of the decorative molded body was evaluated according to the following evaluation method.

### (Evaluation of Dye Migration by Molding of Decorative Molded Body)

The decorative molded body thus molded was observed visually, and the dye migration of the decorated molded body was evaluated using the contamination gray scale, and rated using grades 1 (significant contamination) to 5 (no contamination).

### (Evaluation of Color Migration of Decorative Molded Body by Accelerated Testing)

A decorating sheet was placed on top of the surface of an ABS resin or polycarbonate rectangular plate of 30 mm × 50 mm having a thickness of 1.5 mm, and was uniformly pressurized so as to apply a load of 7.5 g/cm² thereto. Then, the whole was left under an atmosphere of 70°C and 95% RH for 24 hours. Then, the color difference ΔE* between the rectangular plate before being left and the rectangular plate after being left was measured with a spectrophotometer, and was evaluated according to the following criteria.
Grade 5: 0.0 ≤ ΔE* ≤ 0.2
Grade 4-5: 0.2 < ΔE* ≤ 1.4
Grade 4: 1.4 < ΔE* ≤ 2.0
Grade 3-4: 2.0 < ΔE* ≤ 3.0
Grade 3: 3.0 < ΔE* ≤ 3.8
Grade 2-3: 3.8 < ΔE* ≤5.8
Grade 2: 5.8 < ΔE* ≤7.8
Grade 1-2: 7.8 < ΔE* ≤ 11.4
Grade 1: 11.4 < ΔE*

The results are shown in Table 2 below.

**[Table 2]**

| Example No. | Ex. 10 | Ex. 11 | Ex. 12 | Ex. 13 | Com. Ex. 4 | Com. Ex. 5 |
|---|---|---|---|---|---|---|
| Fineness (dtex) | 0.08 | 0.08 | 0.2 | 0.08 | 0.08 | 0.08 |
| Polyurethane ratio (mass%) | 10 | 10 | 10 | 10 | 10 | 10 |
| owf% | 18 | 5 | 6 | 18 | 12 | 13 |

| Decorating sheet | | | | | | |
|---|---|---|---|---|---|---|
| Water fastness (grade) | 4-5 | 4 | 4-5 | 4 | 4-5 | 4-5 |
| L* value | 36 | 47 | 42 | 33 | 34 | 30 |
| Color migration to ABS during molding | 5 | 5 | 5 | 3-4 | 1 | 1 |
| Color migration to PC during molding | 5 | 5 | 5 | 4 | 1 | 1 |
| Accelerated testing of color migration to ABS during molding (ΔE) | 5 | 5 | 5 | 3 | 2 | 2 |
| Accelerated testing of color migration to PC during molding (ΔE) | 4-5 | 5 | 5 | 3-4 | 2 | 2 |

### [Example 11]

A decorating sheet was obtained by dyeing the suede-like fiber base material in the same manner as in Example 10 except that dyeing was performed in Example 10 under the following dyeing conditions.

The fiber base material was dyed into blue by being immersed in a 90°C dye liquid containing 5% owf of Nichilon Blue-AZN (manufactured by NISSEI KASEI CO., LTD.) as a cationic dye and 1 g/L of 90% acetic acid as a dyeing assistant at a bath ratio of 1:30 for 40 minutes. Then, the step of soaping the fiber base material in the same dyeing bath at 70°C using a hot water bath containing 2 g/L of Sordine R as an anionic surfactant was repeated twice. Then, after the soaping, the fiber base material was dried, thereby obtaining a dyed suede-like artificial leather.

Thus, a decorating sheet, which was a dyed dark-blue suede-like artificial leather dyed with a cationic dye that included a fiber base material including a non-woven fabric of cationic dye-dyeable polyester fibers with 0.08 dtex and polyurethane was obtained. The suede-like artificial leather had a thickness of 0.83 mm and an apparent density of 0.47 g/cm³. The L* value was 47.

Then, a preform molded body and a decorative molded body were molded in the same manner as in Example 10, except that the obtained decorating sheet was used in place of the decorating sheet obtained in Example 10, and the preform molded body and the decorative molded body were evaluated in the same manner as in Example 10. The results are shown in Table 2.

### [Example 12]

In place of the suede-like fiber base material produced in Example 10, a suede-like fiber base material including a non-woven fabric of cationic dye-dyeable polyester fibers with a fineness of 0.2 dtex, and having a polyurethane ratio of 10 mass%, a thickness of 0.82 mm, and an apparent density of 0.46 g/cm³ was produced. Then, the obtained fiber base material was dyed into red by being immersed in a 90°C dye liquid containing 6% owf of Nichilon Red-GL (manufactured by NISSEI KASEI CO., LTD.) serving as a cationic dye, and 1 g/L of 90% acetic acid as a dyeing assistant at a bath ratio of 1:30 for 40 minutes. Then, the step of soaping the fiber base material in the same dyeing bath at 70°C using a hot water bath containing 2 g/L of Sordine R as an anionic surfactant was repeated twice. Then, after the soaping, the fiber base material was dried, to obtain a decorating sheet, which was a suede-like artificial leather. Thus, a decorating sheet, which was a dark-red suede-like artificial leather dyed with a cationic dye that included a fiber base material including a non-woven fabric of cationic dye-dyeable polyester fibers with a fineness of 0.2 dtex and polyurethane was obtained. The suede-like artificial leather had a thickness of 1.19 mm and an apparent density of 0.40 g/cm³. In addition, the L* value was 42.

Then, a preform molded body and a decorative molded body were molded in the same manner as in Example 10, except that the obtained decorating sheet was used in place of the decorating sheet obtained in Example 10, and were evaluated in the same manner as in Example 10. The results are shown in Table 2.

### [Example 13]

A decorating sheet, which was a suede-like artificial leather, was obtained by dyeing the suede-like fiber base material in the same manner as in Example 10, except that dyeing was performed under the following dyeing conditions in Example 10.

The suede-like fiber base material was dyed into blue by being immersed in a 90°C dye liquid containing 5% owf of Nichilon Blue-AZN (manufactured by NISSEI KASEI CO., LTD.) as a cationic dye, and 1 g/L of 90% acetic acid as a dyeing assistant at a bath ratio of 1:30 for 40 minutes. Then, washing with water was performed once in the same dyeing bath at 70°C. Then, the suede-like fiber base material was dried, to obtain a decorating sheet, which was a dark-blue suede-like artificial leather dyed with a cationic dye.

The suede-like artificial leather had a thickness of 0.83 mm and an apparent density of 0.47 g/cm³. In addition, the L* value was 33. Then, a preform molded body and a decorative molded body were molded in the same manner as in Example 10, except that the obtained decorating sheet was used in place of the decorating sheet obtained in Example 10, and were evaluated in the same manner as in Example 10. The results are shown in Table 2.

### [Comparative Example 4]

A suede-like fiber base material including a non-woven fabric to which polyurethane had been applied was obtained in the same manner as in Example 10, except that isophthalic acid-modified PET (containing 6 mol% of an isophthalic acid unit) was used as the thermoplastic resin serving as the island component. Then, the suede-like fiber base material was jet-dyed with D. Red-W, Kiwalon Rubin 2GW, and Kiwalon Yellow 6GF serving as disperse dyes at 130°C for 1 hour, and reductively cleaned in the same dyeing bath, to obtain a decorating sheet, which was a dyed dark-red suede-like artificial leather. Then, the obtained decorating sheet was evaluated in the same manner as in Example 10. The results are shown in Table 2.

### [Comparative Example 5]

A suede-like fiber base material including a non-woven fabric to which polyurethane had been applied was obtained in the same manner as in Example 10, except that isophthalic acid-modified PET (containing 6 mol% of an isophthalic acid unit) was used as the thermoplastic resin serving as the island component. Then, the suede-like fiber base material was jet-dyed with D Blue HLA, D Red HLA, and D Yellow HLA serving as disperse dyes at 130°C for 1 hour, and reductively cleaned in the same dyeing bath, to obtain a decorating sheet, which was a dyed dark-blue suede-like artificial leather. Then, the obtained decorating sheet was evaluated in the same manner as in Example 10. The results are shown in Table 2.

### [Reference Signs List]

- 1: Artificial leather base material
- 2: Resin layer
- 3: Rubber sole (resin layer)
- 3a, 5a: Adhesive layer
- 5: Patch (resin layer)
- 7, 8, 10: Resin layer-equipped artificial leather
- 11: Decorating sheet
- 12: Thermoplastic resin sheet
- 13: Superposed body
- 14, 15: Preform molded body
- 16: Molded body to be decorated
- 20: Shoe
- 30: Decorative molded body

### [Industrial Applicability]

With the artificial leather base material according to the present invention, the surface of a resin molded body, including, for example, a portable terminal body (smartphone, tablet PC) and accessories thereof such as a case and a cover, the casing of an electronic device, a vehicle interior material, and a cosmetics case, can be decorated like a dark-color artificial leather. Furthermore, the artificial leather base material according to the present invention can be suitably used for skin members of clothing, shoes, articles of furniture, car seats, general merchandise and the like as a resin layer-equipped artificial leather and a napped artificial leather.

## Claims

1. An artificial leather base material comprising
a fiber base material that includes cationic dye-dyeable polyester fibers and an elastic polymer,
wherein the artificial leather base material is dyed with at least one cationic dye and has a surface with a lightness L* value of ≤ 50.

2. The artificial leather base material according to claim 1,
wherein the fiber base material includes a non-woven fabric of the cationic dye-dyeable polyester fibers and the elastic polymer.

3. The artificial leather base material according to claim 1 or 2,
wherein the artificial leather base material has a grade of color difference, determined in an evaluation of color migration to a white polyvinyl chloride film with a thickness of 0.8 mm under a load of 750 g/cm² at 50°C for 16 hours, of 4 or more.

4. The artificial leather base material according to any one of claims 1 to 3,
wherein, when a white polyurethane film with a thickness of 250 µm is pressure-bonded under heating to a surface of the artificial leather base material via a polyurethane adhesive under 5 Kg/cm² at 130°C for 1 minute to form a resin layer-equipped artificial leather, and the resin layer-equipped artificial leather is pressurized under heating under 20 Kg/cm² at 150°C for 1 minute, the artificial leather has a grade of color difference, determined in an evaluation of color migration to the white polyurethane film, of 3 or more.

5. The artificial leather base material according to any one of claims 1 to 4,
wherein the artificial leather base material has a grade of color difference, determined in an evaluation of color migration using methyl ethyl ketone (MEK), of 2 or more.

6. The artificial leather base material according to any one of claims 1 to 5,
wherein a product of a softness and a thickness of the artificial leather base material is 2 or more.

7. The artificial leather base material according to any one of claims 1 to 6,
wherein the artificial leather base material contains 0.5 to 20 parts by mass of the cationic dye, per 100 parts by mass of the fiber base material.

8. The artificial leather base material according to any one of claims 1 to 7,
wherein the artificial leather base material has a grade, determined in a water fastness test for a cotton cloth in accordance with JIS L 0846, of 4-5 or more.

9. A resin layer-equipped artificial leather comprising:
the artificial leather base material according to any one of claims 1 to 8; and a resin layer stacked on at least one surface of the artificial leather base material.

10. The resin layer-equipped artificial leather according to claim 9,
wherein the resin layer has a surface with a lightness L* value of > 50.

11. The resin layer-equipped artificial leather according to claim 9 or 10,
wherein a lightness difference ΔL* between the artificial leather base material and the resin layer is 10 or more.

12. A napped artificial leather obtained by napping at least one surface of the artificial leather base material according to any one of claims 1 to 8, the artificial leather base material having a surface with a lightness L* value of ≤ 50.

13. A shoe comprising:
the napped artificial leather according to claim 12 as an upper material; and an outsole bonded to the upper material, the outsole having a lightness L* value of > 50.

14. A decorating sheet for being integrated with a molded body to be decorated, comprising
the artificial leather base material according to any one of claims 1 to 8.

15. The decorating sheet according to claim 14,
wherein the decorating sheet is a preform molded body shaped into a three-dimensional shape.

16. A decorative molded body comprising:
a molded body to be decorated; and the decorating sheet according to claim 14 or 15 that is stacked and integrated on the molded body to be decorated.

17. The decorative molded body according to claim 16,
wherein the molded body to be decorated has a lightness L* value of > 50.

18. The decorative molded body according to claim 16 or 17,
wherein a lightness difference ΔL* between the decorating sheet and the molded body to be decorated is 10 or more.
